(19) Europäisches Patentamt
European Patent Office
Office européen des brevets

(11) **EP 2 889 641 B1**

(12) **EUROPEAN PATENT SPECIFICATION**

(45) Date of publication and mention
of the grant of the patent:
**02.06.2021 Bulletin 2021/22**

(21) Application number: **14200098.3**

(22) Date of filing: **23.12.2014**

(51) Int Cl.:
*G01S 17/42* (2006.01)      *G06K 9/00* (2006.01)
*G06T 7/12* (2017.01)       *H04N 13/271* (2018.01)
*H04N 13/239* (2018.01)     *G01S 17/86* (2020.01)
*G01S 17/931* (2020.01)     *H04N 13/00* (2018.01)

(54) **Image processing apparatus, image processing method, program and image processing system**

Bildverarbeitungsvorrichtung, Bildverarbeitungsverfahren, Programm und Bildverarbeitungssystem

Appareil, procédé, programme et système de traitement d'images

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2013  JP 2013272524
19.12.2014  JP 2014256892**

(43) Date of publication of application:
**01.07.2015  Bulletin 2015/27**

(73) Proprietor: **Ricoh Company, Ltd.
Tokyo 143-8555 (JP)**

(72) Inventors:
• **GUAN, Haike
Tokyo, 143-8555 (JP)**
• **SEKIGUCHI, Hiroyoshi
Tokyo, 143-8555 (JP)**
• **YOKOTA, Soichiro
Tokyo, 143-8555 (JP)**
• **AOKI, Shin
Tokyo, 143-8555 (JP)**
• **YOSHIDA, Jun
Tokyo, 143-8555 (JP)**
• **SUZUKI, Shuichi
Kanagawa, 222-8530 (JP)**
• **NAKAJIMA, Mitsuru
Kanagawa, 222-8530 (JP)**
• **FUJIMOTO, Hideomi
Kanagawa, 222-8530 (JP)**

(74) Representative: **SSM Sandmair
Patentanwälte Rechtsanwalt
Partnerschaft mbB
Joseph-Wild-Straße 20
81829 München (DE)**

(56) References cited:
**EP-A2- 2 669 845         WO-A1-2013/179993
GB-A- 2 289 816          JP-A- 2012 225 806
US-A1- 2008 024 607      US-A1- 2013 120 575**

**Description**

**BACKGROUND OF THE INVENTION**

1. Field of the Invention

The disclosures herein generally relate to an image processing apparatus, an image processing method, a program thereof and an image processing system that detects a predetermined image region from an image picked up by an imaging apparatus that can obtain distance information.

2. Description of the Related Art

Conventionally, a variety of driving supports using results of analyses of images picked up by cameras mounted on vehicles have been known. For example, by an image processing apparatus recognizing an object such as a front vehicle or a pedestrian from the image, a vehicle-mounted apparatus can alert a driver that the own vehicle is in danger of abnormally approaching the object, or control a brake to reduce damage. Moreover, the image processing apparatus recognizes a pedestrian who runs out into a road, and draws the driver's attention to the pedestrian.

In the above-described image analysis, high accuracy in the recognition of objects is required. In related art, the recognition of objects is assisted by a sensor other than a camera (see, for example, Japanese Published Patent Application Nos. 2000-329852 and 2004-28727). Japanese Published Patent Application No. 2000-329852 discloses an obstacle recognition system that recognizes an object by a stereo camera and a scanning laser radar separately, and weights results of their recognitions according to respective reliabilities of these range finding means, and thereby determines whether the object exists.

Moreover, Japanese Published Patent Application No. 2004-28727 discloses a monitoring system that divides distance image data into plural partitions and corrects a distance to a three-dimensional object in the distance image data referring to a distance to a predetermined position measured by a laser radar system.

By the way, there is a case where detecting a specific region is effective in recognizing an object with high accuracy. For example, when a road surface region can be detected, the accuracy in recognizing an object in the image processing apparatus can be enhanced by using a relative positional relationship between the object and the road surface.

Document JP 2012 225806 A discloses a road gradient estimation device and program in which a road surface reflection point extraction part 22 extracts a road surface reflection point from observation data of a laser radar 12, and a first solid object candidate extraction part 24 extracts a first solid object candidate from the remaining point groups.

However, there has been a problem in that it is quite difficult to detect a road surface region only by the image analysis. For example, in the case where a road surface is slanted, the detection of the road surface region may become inaccurate. In Japanese Published Patent Applications No. 2000-329852 and No. 2004-28727, laser radars are used. But, of these Japanese Published Patent Applications neither No. 2000-329852 nor No. 2004-28727 discloses detecting the road surface region by using results of the range finding by the laser radars.

Document GB 2 289 816 A discloses an obstacle detecting system for a motor vehicle which is capable of detecting not only the distance to an obstacle in front of the vehicle and the width thereof but also its height, for allowing motor vehicle control to be effected more appropriately with high reliability. The distance to the object in front of the vehicle and its width are detected by an azimuthally scanning lidar unit, while the distance to an object caught within one of the windows preset by window setting means is also detected by a distance detecting circuit of a stereoscopic video camera unit.

Document US 2013/120575 A1 discloses an apparatus for use in a vehicle which identifies road markers. The apparatus includes a sensor unit configured to collect image information ahead of the vehicle, distance information, and information on the reflected amount of a road surface. The apparatus includes a recognizer unit configured to recognize the road markers ahead of the vehicle on the basis of the image information, distance information, and information on the reflected amount provided from the sensor unit.

In document WO 2013/179993 A1, disparity information is generated from a plurality of imaged images imaged by a plurality of imagers. Disparity histogram information that shows disparity value frequency distribution in each of line regions obtained by plurally dividing the plurality of imaged images in a vertical direction is generated. A group of disparity values or disparity value range that is consistent with a feature in which a disparity value becomes smaller as it approaches an upper portion of the imaged image from a disparity value or a disparity value range having frequency that exceeds a predetermined specified value is selected. A slope condition of a road surface in front of a driver's vehicle with respect to a road surface portion on which the driver's vehicle travels is identified in accordance with the selected group of disparity values or disparity value range.

Document EP 2 669 845 A2 discloses a target recognition system, a target recognition method, and a target recognition program, to recognize one or more recognition targets, operatively connected to an imaging device to capture an image of an area ahead of the target recognition system, each of which includes a recognition area detector to detect multiple recognition areas from the captured image; a recognition weighting unit to weight the probability of images of the recognition targets being present in each of the respective recognition areas detected by the recognition area detector; and a target recognition processor to recognize the one or more recognition targets in a specified recognition area based on the recognition weighting given to the respective recognition areas.

Document US 2008/024607 A1 discloses an image display apparatus including a camera, a laser radar, a depression angle correction calculation device, a three-dimensional object detection device, and a viewpoint conversion device, which are installed in a vehicle. The laser radar detects changes in the condition of a road surface with respect to the camera. The depression angle correction calculation device adds a correction angle to a depression angle of the camera. The viewpoint conversion device reduces the correction angle if the change in road surface condition detected by the laser radar is due to a three-dimensional object detected by the three-dimensional object detection device.

## SUMMARY OF THE INVENTION

It is a general object of at least one embodiment of the present invention to provide an image processing apparatus, an image processing method, a program thereof and an image processing system that substantially obviate one or more problems caused by the limitations and disadvantages of the related art.

In one embodiment, an image processing apparatus for detecting an image region in an image picked up by a stereo camera is defined by claim 1.

In another embodiment, an image processing method for detecting an image region in an image picked up by a stereo camera is defined by claim 7.

In yet another embodiment, a computer program for causing a computer to perform the method is defined by claim 8.

In yet another embodiment, an image processing system for detecting an image region in an image picked up by a stereo camera and detecting a detection target based on the image region is defined by claim 9.

According to the present invention, an image processing apparatus, an image processing method, a program thereof and an image processing system that recognize a specific region from an image picked up by an imaging means can be provided.

## BRIEF DESCRIPTION OF THE DRAWINGS

Other objects and further features of embodiments will be apparent from the following detailed description when read in conjunction with the accompanying drawings, in which:

Figs. 1A to 1C are explanatory diagrams illustrating an example for schematically explaining a method of detecting a road surface region according to a present embodiment;

Figs. 2A to 2C are explanatory diagrams illustrating an example for explaining a disadvantage of the conventional method of detecting a road surface region;

Figs. 3A to 3C are explanatory diagrams illustrating an example in the case where a slanted road surface is a descending road surface;

Figs. 4A to 4C are explanatory diagrams illustrating an example for schematically explaining detecting a road surface region by an image processing apparatus according to the present embodiment;

Fig. 5 is an example of a functional block diagram of the image processing system according to the present embodiment;

Fig. 6 is a diagram illustrating an example of a hardware configuration diagram of a stereo camera according to the present embodiment;

Fig. 7 is a diagram illustrating an example of stereo images picked up by the stereo camera according to the present embodiment;

Fig. 8 is an explanatory diagram illustrating an example for explaining a configuration of the stereo camera according to the present embodiment and parallax;

Fig. 9 is an example of a hardware block diagram of the image processing apparatus according to the present embodiment;

Fig. 10 is an example of a schematic configuration diagram of a laser radar range finding unit according to the present embodiment;

Fig. 11 is a diagram illustrating an example of an optical scanner using a polygon mirror according to the present embodiment;

Fig. 12 is a diagram illustrating an example of a Haar-like feature value according to the present embodiment;

Fig. 13 is an explanatory diagram illustrating an example for schematically explaining an object identification device included in an object recognition unit according to the present embodiment;

Fig. 14 is an explanatory diagram illustrating an example for schematically explaining detection of a block and recognition of an object according to the present embodiment;

Figs. 15A and 15B are diagrams illustrating an example of a result of recognizing an object candidate region in an image according to the present embodiment;

Fig. 16 is an explanatory diagram illustrating an example for explaining detection of a road surface region according to the present embodiment;

Figs. 17A and 17B are diagrams illustrating an example of a line obtained from peaks of histograms according to the present embodiment;

Fig. 18 is an explanatory diagram illustrating an example for explaining detection of a road surface region during travelling on a slanted road according to the present embodiment;

Figs. 19A and 19B are explanatory diagrams illustrating an example for explaining detection of a slope by the laser radar range finding unit according to the present embodiment;

Fig. 20 is a diagram illustrating an example of a table in which a slope angle is associated with a number of approximate curves according to the present embodiment;

Fig. 21 is an explanatory diagram illustrating an example for explaining detection of a road surface region in the case where the road surface is slanted according to the present embodiment;

Figs. 22A and 22B are explanatory diagrams illustrating an example for explaining detection of a slope by the laser radar range finding unit according to the present embodiment;

Fig. 23 is an explanatory diagram illustrating another example for explaining detection of a road surface region in the case where the road surface is slanted according to the present embodiment; and

Fig. 24 is a flowchart illustrating an example of a procedure of recognizing an object in the image processing apparatus according to the present embodiment.

## DESCRIPTION OF THE PREFERRED EMBODIMENTS

[Detection of road surface region and disadvantage occurring in detection]

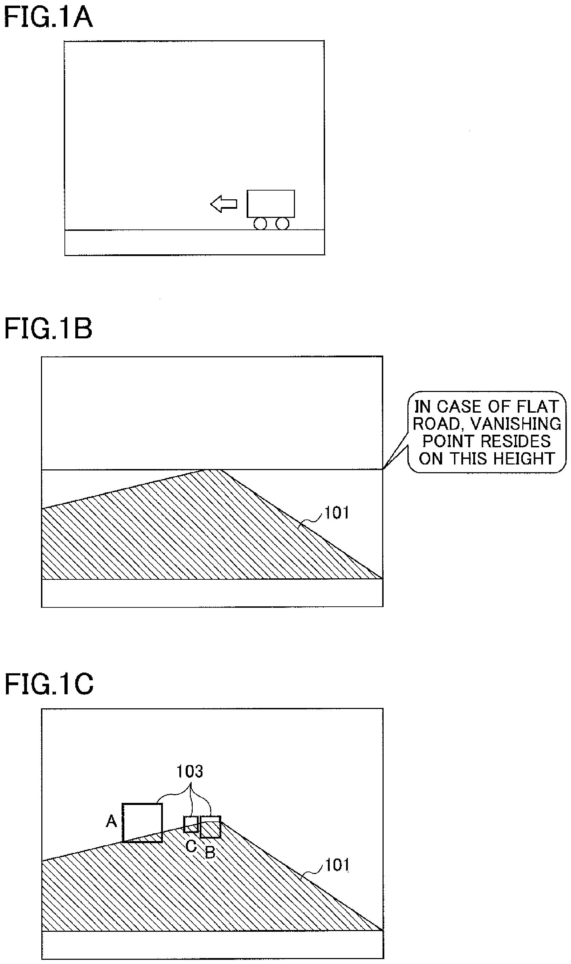

First, with reference to Figs. 1A to 1C, a conventional method of detecting a road surface region according to the present embodiment will be explained schematically. Fig. 1A is a diagram illustrating an example of an inclination of a road surface on which a vehicle travels. The vehicle travels leftward on a flat road.

Fig. 1B is a diagram illustrating an example for explaining schematically an image picked up by a camera installed on the vehicle. Since the camera is fixed in the vehicle (for example, the camera is fixed so that an optical axis is directed in a direction horizontal to the road surface), a vanishing point of the road surface region 101 resides in a position a height of which in the vertical direction in the image takes a predetermined value. The image processing apparatus determines the road surface region 101 by using a property that a parallax value of the road surface for one line in the horizontal direction of the image is almost constant (which will be described later in detail). Meanwhile, the optical axis of the camera is an example of an imaging direction recited in claims.

Fig. 1C is a diagram illustrating an example for explaining schematically an arrangement of object candidate regions 103 in the road surface region 101. The image processing apparatus, as described later, performs object recognition processing for the image and recognizes the object candidate regions 103 A to C. An object which a driver of the vehicle should be careful about is considered to be an object on the road. Thus, the image processing apparatus detects one of the object candidate regions 103, which is at least partially overlapped with the road surface region 101, as an object region, and determines that an object is imaged in the object candidate region 103 overlapped with the road surface region 101. Then, the vehicle performs driving support such as attention attraction based on the object region.

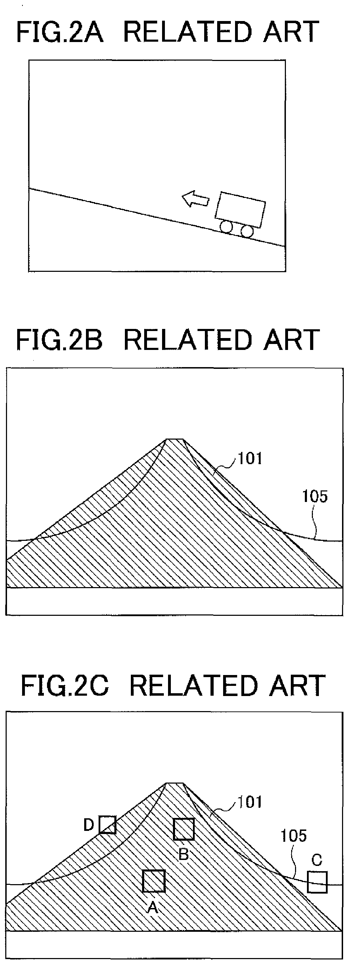

Next, with reference to Figs. 2A to 2C, the disadvantage in the conventional method of detecting a road surface region will be explained. Fig. 2A is a diagram illustrating an example of an inclination of a road surface on which a vehicle travels. The vehicle travels leftward on an ascending road.

Fig. 2B is a diagram illustrating an example for explaining schematically an image picked up by a camera installed on the vehicle. In the case where the vehicle travels on the ascending road, a vanishing point of the road surface moves upward from the position of the vanishing point where the vehicle travels on the flat road 105. However, since the image processing device does not detect that the vehicle travels on the ascending road, the road surface region 101 is detected in the same way as that where the vehicle travels on the flat road. Therefore, a region different from the real road 105 is detected as the road surface region 101.

Fig. 2C is a diagram illustrating an example for explaining schematically an arrangement of object candidate regions 103 in the road surface region 101. The object candidate regions A and B exist on the road surface region 101 detected by the image processing apparatus. However, since the road surface region 101 is different from an actual road 105, the object candidate region C is not overlaid on the road surface region 101 though it is on the actual road 105. In this case, the image processing apparatus determines that an object the driver of the vehicle should be careful about (for example, a building or the like) is not imaged in the object candidate region C. Therefore, a situation where a driving support such as attention attraction based on an object in the object candidate region C cannot be performed may arise.

To the contrary, an object candidate region D is overlaid on the road surface region 101 detected by the image processing apparatus, though it does not exist on the actual road 105, and it may be determined that the object candidate region D travels on the road surface region 101. Therefore, there is a possibility that the vehicle performs unnecessary driving support such as attention attraction based on an object in the object candidate region D.

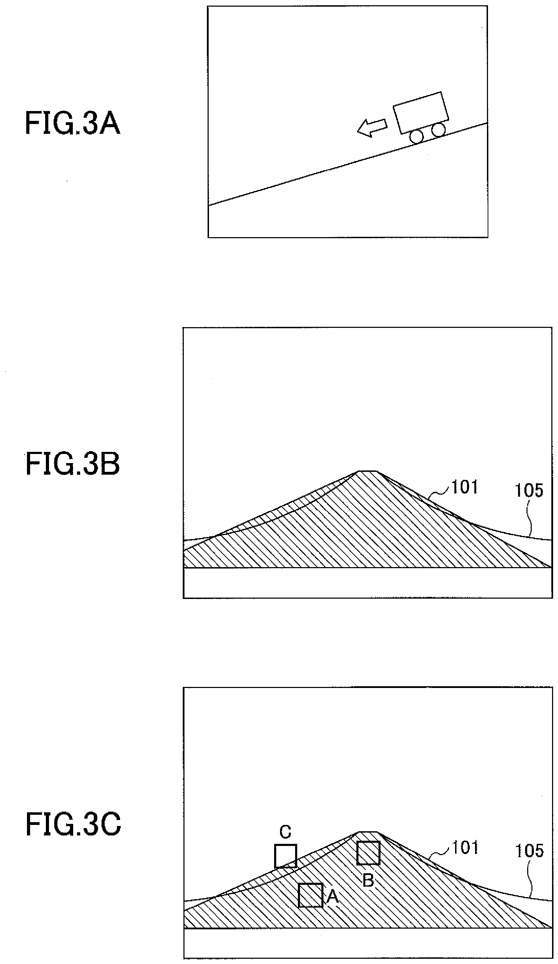

Next, a case where a slanted road surface is a descending road surface will be explained based on Figs. 3A to 3C. In the case of the descending road surface, the same situation as above can arise. As shown in Fig. 3A, the vehicle travels leftward on the descending road. However, the conventional image processing apparatus does not detect the travelling on the descending road, and detects a road surface region 101 in the same way as the case of travelling on the flat road surface as shown in Fig. 3B. Thus, a region different from the actual road 105 is detected as the road surface region 101.

Fig. 3C is a diagram illustrating an example for explaining schematically an arrangement of object candidate regions 103 in the road surface region 101. The object candidate regions A and B exist on the road surface region 101 detected by the image processing apparatus. However, since the object candidate region C does not exist on the actual road 105 but is overlaid on the road surface region 101, a situation where the vehicle performs a driving support such as attention attraction based on an object in the object candidate region C may arise. Meanwhile, in the same way as the case for the ascending road shown in Figs. 2A to 2C, a situation where a driving support is not performed for an object candidate region for which the driving support should be performed may also arise.

Meanwhile, in Figs. 2A to 3C, a shape of the actual road 105 is not substantially different from a shape of the road surface region 101, but the vanishing point may change depending on a detected line, and the shape of the road surface region 101 may be greatly deviated from the actual road 105.

For the above-described disadvantage, the image processing apparatus 100 according to the present embodiment of the invention can detect the road surface region 101 accurately even if the road surface is slanted.

[Outline of detection of road surface region by image processing apparatus according to present embodiment]

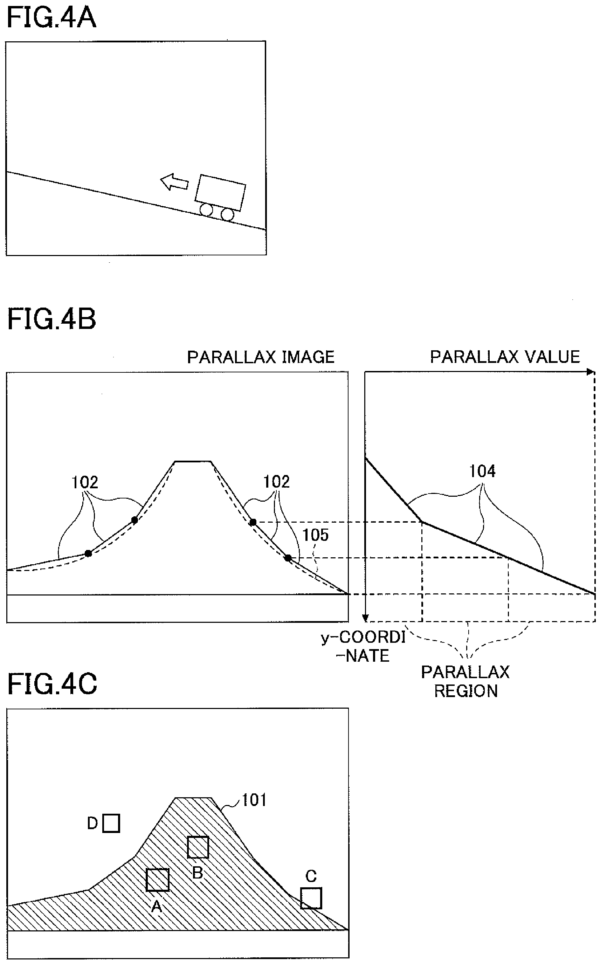

Figs. 4A to 4C are diagrams illustrating an example for schematically explaining an outline of detection of the road surface region 101 by the image processing apparatus according to the present embodiment of the invention. As shown in Fig. 4A, a vehicle travels leftward on an ascending road.

When the image processing apparatus detects that the vehicle travels on a slope from a range finding result by a laser radar as shown in the right part of Fig. 4B, the apparatus performs line detections for detecting the road surface regions plural times for respective regions of parallax values processing for detecting lines 104 from a peak of a histogram of parallax values for respective y-coordinates of a parallax image. In the drawing, three lines 104 are detected. One of the features in the present embodiment of the invention is determining the number of the lines 104 according to the slope of the road surface obtained from the range finding result of the laser radar.

Since approximation accuracy is improved by approximating with plural lines 104, a range of the road surface in the y-coordinate direction of the parallax image in the left part of Fig. 4B can be specified accurately. For example, the vanishing point of the parallax image can be easily made coincident with the y-intercept of the line in the right part of Fig. 4B, and outer edges of the road surface region 101 can be defined with the plural lines 102. Accordingly, the shape of the road surface region 101 of the parallax image can be brought close to the actual road 105.

Fig. 4C is a diagram illustrating an example for schematically explaining an arrangement of object candidate regions on the road surface region 101. Since an object candidate region C is overlaid with the road surface region 101 detected by the image processing apparatus, the vehicle can perform driving support such as attention attraction based on an object in the object candidate region C. Moreover, since an object candidate region D is not overlaid with the road surface region 101 detected by the image processing apparatus, the vehicle can suppress the driving support based on an object in the object candidate region D.

In this way, by combining a distance image picked up by a stereo camera and a laser radar, and by approximating a road surface region, which has been detected as a line in the case of a flat road, with plural lines, the road surface region 101 can be detected accurately. As a result, an object can be recognized with accuracy.

[Example of configuration]

In the following, embodiments of the present invention will be described with reference to the accompanying drawings.

In the present embodiment, a road surface region means a region having a small degree of irregularity so that a vehicle can travel on it. A typical example includes a general-purpose road, an expressway (limited highway), a private road, a farm road, a forest road, a park road, a garden road, a village road or the like. Moreover, even if a region is not called "road", when a vehicle can travel on it, it is included in the road surface region. The road surface region is an example of an image region recited in claims.

Moreover, as an object described in the present embodiment, an object to be detected such as a vehicle detected for performing driving support is mentioned. However, during processing of detection of the object, there may be an object other than the object for performing the driving support that can be detected as the object. Therefore, the object means a detection target or a detection object.

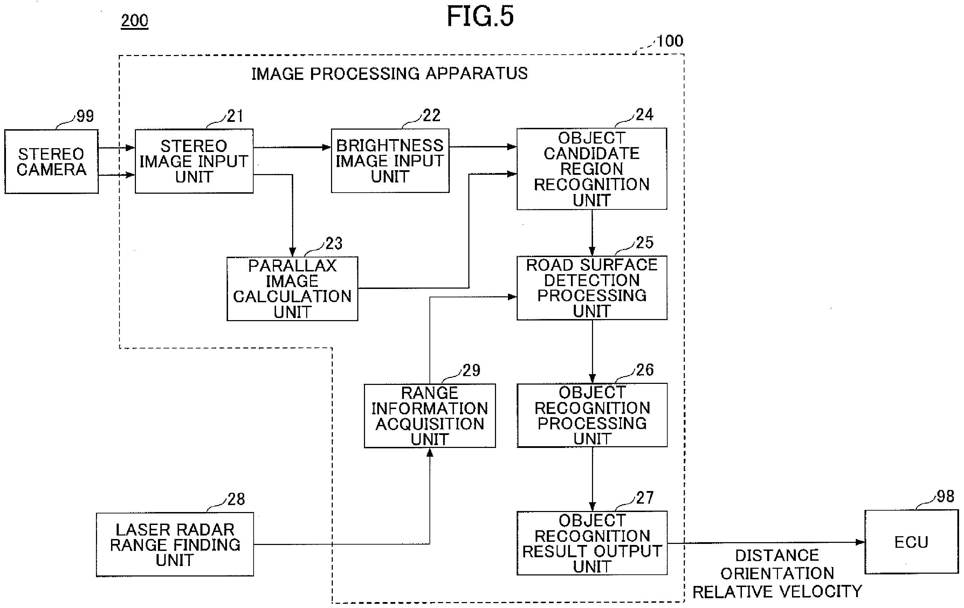

Fig. 5 is a functional block diagram illustrating an example of the image processing system 200. The image processing system 200 includes the apparatus 100, a stereo camera 99, a laser radar range finding unit 28 and an ECU (Electronic Control unit) 98. The image processing apparatus 100 includes a stereo image input unit 21, a brightness image input unit 22, a parallax image calculation unit 23, an object candidate region recognition unit 24, a road surface detection processing unit 25, an object recognition processing unit 26 and an object recognition result output unit 27.

The stereo camera 99 picks up synchronized stereo images (a left image and a right image picked up at the same time) and outputs them to the stereo image input unit 21. The stereo camera 99 is an example of an imaging unit. The stereo camera 99 will be explained later in detail. Meanwhile, in the present embodiment, a distance image is picked up by the stereo camera 99. But, a monocular TOF (Time of Flight) camera in which a part of pixels is used for detecting a distance or a monocular camera, which calculates parallax by comparing plural frames on the assumption that the camera moves, may be used in examples not forming part of the invention. The monocular camera does not require calibration for adjusting a base-line length, and cost can be reduced.

The stereo image input unit 21 outputs the stereo images to the brightness image input unit 22 and to the parallax image calculation unit 23. The brightness image input unit 22 outputs a left image or a right image of the stereo images to the object candidate region recognition unit 24 as a brightness image. The image is stored in a memory region in the image processing apparatus 100. It is determined in advance whether to input the left image or the right image. It may be dynamically switched according to an estimated image quality such as contrast.

The parallax image calculation unit 23 calculates a difference between imaging positions (i.e. parallax) in the left and right images using the stereo images input from the stereo image input unit 21. The parallax is calculated for each pixel or each pixel block, and a parallax image in which each pixel or each pixel block is associated with parallax information is obtained. Since an overlap region is required in the stereo images for obtaining the parallax, strictly speaking, the parallax image is an overlapping part in the stereo images.

Moreover, the image processing apparatus 100 can calculate distances to the picked up target for the respective pixels or the pixel blocks according to the parallaxes. An image in which distance information is associated with each of the pixels or each of the pixel blocks will be called "distance image" in the following.

Meanwhile, the brightness image and the parallax image are synchronized with each other. That is, since one of the stereo images is the brightness image, the brightness image and the parallax image are picked up at the same time.

The object candidate region recognition unit 24 recognizes the object candidate region 103 using the parallax image output by the parallax image calculation unit 23 or the brightness image output by the brightness image input unit 22. The object candidate region 103 is an example of a detection object candidate region recited in claims.

The laser radar range finding unit 28 emits, for example, a pulsed laser light and receives a reflected light from the object. The object on which the laser light is incident or a position on which the laser light is incident in the object is a reflection position recited in claims. The laser radar range finding unit 28 is an example of an electromagnetic wave emitting unit

A reflection light is an example of a reflection wave recited in claims. By measuring time from the emission of a laser light to the reception of the reflected laser light, a distance to the object is measured. Moreover, from a direction of emission of the laser light and the distance, a lateral position can be calculated.

The road surface detection processing unit 25 detects the road surface region 101 at least using the parallax image. Moreover, the road surface detection processing unit 25 estimates an inclination of the road surface based on object information (distance, orientation (lateral position/slope), relative velocity), and changes a set value for detecting the road surface region 101. The set value is a number of lines for defining the road surface region, and is "1" for a flat road and is "2" or more for a slanted road.

A range finding information acquisition unit 29 acquires object information detected by the laser radar range finding unit 28 and outputs it to the road surface detection processing unit 25.

The object recognition processing unit 26 detects an object region from the object candidate region 103 based on a relative relationship between the road surface region 101 detected by the road surface detection processing unit 25 and an object candidate region 103 recognized by the object candidate region recognition region 24. The object region is an example of a detection object region recited in claims.

Then, the object recognition result output unit 27 outputs object information for the object region recognized by the object recognition processing unit 26. The object information includes a distance, an orientation (lateral position), a relative velocity or the like.

The ECU 98 performs various driving supports using the object information output by the image processing apparatus 100 (or the laser radar range finding unit 28). The driving supports vary according to the vehicle. For example, when a lateral position of the object resides within a width of the own vehicle, an issuance of warning, braking or the like is performed in response to a TTC (Time To Collision). Moreover, in the case where it is difficult to stop before collision, the vehicle is steered in a direction so as to avoid the collision.

Moreover, the ECU 98 performs vehicle speed inter-vehicle distance control for travelling following a preceding vehicle with an inter-vehicle distance depending on a vehicle speed. When the preceding vehicle stops the own vehicle stops, and when the preceding vehicle starts the own vehicle starts. Moreover, in the case where the image processing apparatus 100 performs white line recognition or the like, lane keeping control for steering so as to travel in the center of a traffic lane can be performed.

Moreover, in the case where an obstacle exists in the travelling direction when the own vehicle stops, sudden starting can be suppressed. For example, when an obstacle exists in the travelling direction which is determined by an operation position of a gear lever and when an operation amount of an acceleration pedal is large, damage is reduced by restricting engine output, issuing a warning or the like.

Meanwhile, the configuration illustrated in Fig. 5 is merely an example. The stereo camera 99 may be provided with the function of the image processing apparatus 100. Moreover, the laser radar range finding unit 28 may be included in the image processing apparatus 100. The stereo camera 99, the image processing apparatus 100 and the laser radar range finding unit 28 may be integrally formed.

<Stereo camera and parallax image>

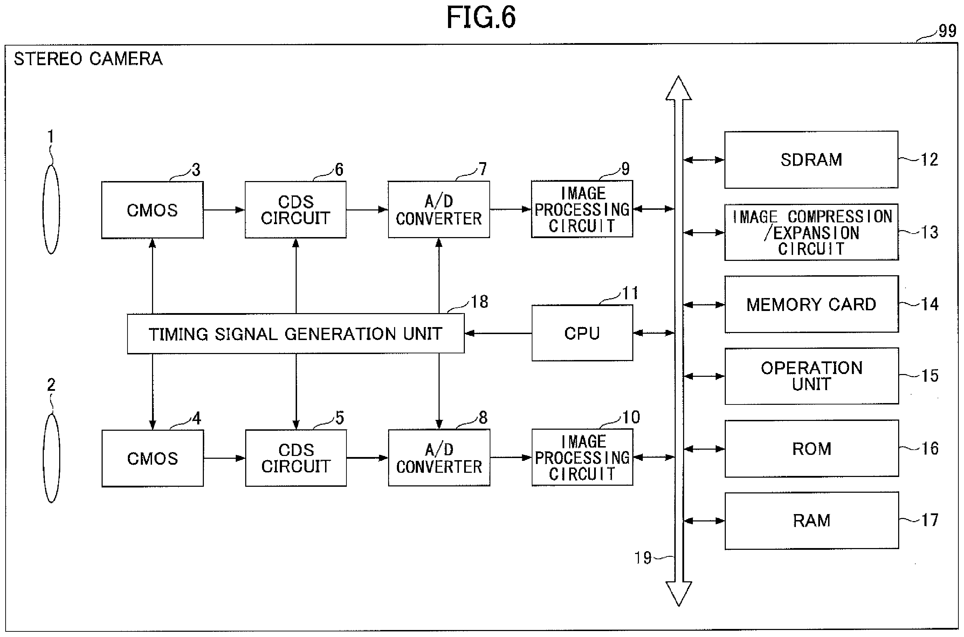

Fig. 6 is a diagram illustrating an example of a hardware configuration diagram of the stereo camera 99. A subject light first passes through left and right imaging optical systems (lenses) 1 and 2 of the stereo camera 99, and is focused on CMOS (Complementary Metal Oxide Semiconductor) 3 and 4. An entire operation of the stereo camera 99 is controlled by a CPU (Central Processing Unit) 11. Meanwhile, the stereo camera may be able to perform color imaging. In this case, using any of images of RGB or after converting into a brightness image, the road surface detection or the object recognition is performed. Moreover, the stereo camera may perform imaging via a polarization filter. By using the polarization filter a picture that is difficult to visually recognize by the naked eye can be obtained, and accuracy in the road surface detection or the object recognition can be enhanced.

The CMOS 3 and the CMOS 4 convert the respective optical images focused on imaging surfaces into electric signals, and output them as analogue image data. For an alternative imaging element, a CCD may be used. Noise components are removed from the image data output from the CMOS 3 and the CMOS 4 by a CDS (Correlated Double Sampling) circuit 5 and a CDS circuit 6. After being converted into digital values by A/D convertors 7 and 8, the signals are output to image processing circuits 9 and 10.

Operation timings in the CMOSs 3 and 4, the CDS circuits 5 and 6, and the A/D converters 7 and 8 are controlled by a timing signal generation unit 18 which is controlled by the CPU 11.

The image processing circuits 9, 10 performs various kinds of image processing such as the conversion processing from RGB to YCrCb, the white balance control processing, the contrast correction processing, the edge enhancement processing, the color conversion processing or the like using an SDRAM (Synchronous DRAM) 12 which stores image data temporarily. Meanwhile, the white balance processing is for adjusting color densities of image information. The contrast correction processing is for adjusting contrast of the image information. The edge enhancement processing is for adjusting sharpness of the image information. The color conversion processing is for adjusting shade of the image information.

Moreover, image data subjected to the image processing and stored in the SDRAM are compressed by an image compression/expansion circuit 13 and stored in a memory card 14. The image compression/expansion circuit 13 is for compressing image information output from the image processing circuits 9, 10 and outputting it to the memory card 14, and expanding image information readout from the memory card 14 and outputting it to the image processing circuits 9, 10.

The image processing circuits 9, 10, the image compression/expansion circuit 13 and the memory card 14 are also controlled by the CPU 11.

The stereo camera 99 includes a ROM (Read-Only Memory) 16 that stores a program or the like. The CPU 11 performs various kinds of arithmetic processing according to the program. Moreover, the stereo camera 99 includes a RAM (Random Access Memory) 17 or the like which is a freely readable and freely writable memory having a work area that the CPU 11 uses in various kinds of processing and various kinds of data storage or the like. Main blocks are connected to each other via a bus line 19.

Stereo images picked up by the stereo camera 99 are output to the stereo image input unit 21 in the image processing apparatus 100.

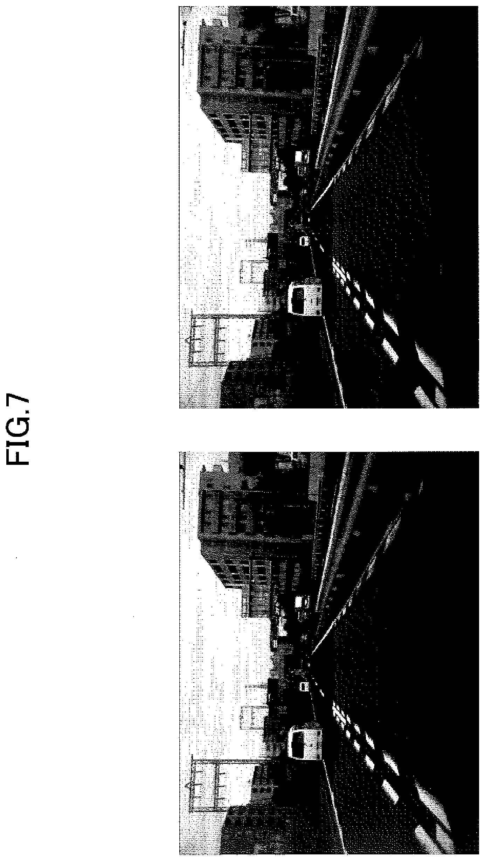

Fig. 7 is a diagram illustrating an example of stereo images picked up by the stereo camera 99. The stereo images are picked up at the same time and are almost the same, but include parallax. The parallax image calculation unit 23 calculates a difference between positions of an imaging target in left and right images (parallax) using the stereo images input from the stereo image input unit 21.

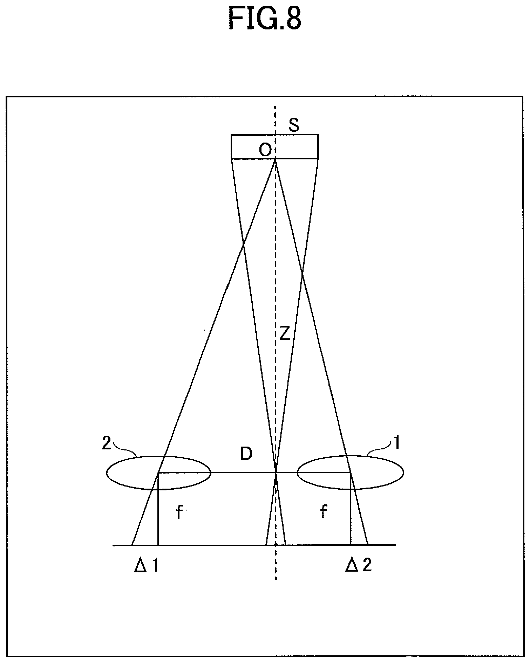

Fig. 8 is a diagram illustrating an example for explaining a configuration of the stereo camera 99 and parallax. An image of a point O on a subject S passes through left and right lenses and is focused on an imaging element at a focal length f. A distance from the lens to the subject S is denoted by Z, and a distance between centers of the left and right lenses (base-line length) is denoted by D. Moreover, distances between the focusing positions in the left and right images and the center of the lens are denoted by $\Delta 1$ and $\Delta 2$. Therefore, the parallax of the point O is $\Delta = \Delta 1 + \Delta 2$.

The above-described parallax is calculated by performing block matching for the same part in the left and right images. That is, one of the left image and the right image is selected as a reference image. For example, in the case of selecting the left image as the reference image, a block is defined in the left image wherein a center of the block is a target pixel. A difference between brightness of a pixel in the block in the left image and brightness of a pixel in a block in the right image which is defined in the same position in the left image is calculated. Then, a sum of the brightness differences in the blocks is calculated. Furthermore, the block in the right image is moved by one pixel and the calculation of the sum of brightness difference is performed. After repeating the movement of the block in the right image and the calculation of the sum, the position of the block in the right image where the sum of the brightness difference is the smallest is obtained. The amount of movement of the block in the right image corresponds to the parallax. For example, when the sum of the brightness differences between the block in the left image with the center at (x, y) and the block in the right image with the center at $(x+\Delta, y)$ is the smallest, the parallax is $\Delta$.

A size of the block is arbitrary. In the present embodiment, when the size of image is 1280 x 960 pixels, the size of the block is, for example, 5 x 5 pixels. An optimum size of the block is adjusted experimentally and set.

Moreover, when the parallax is D, the distance Z is expressed by the following formula.

Formula 1

$$ Z \ = \ D \cdot f \ / \ \Delta \qquad \cdots\cdots\cdots\cdots\cdots \quad (1) $$

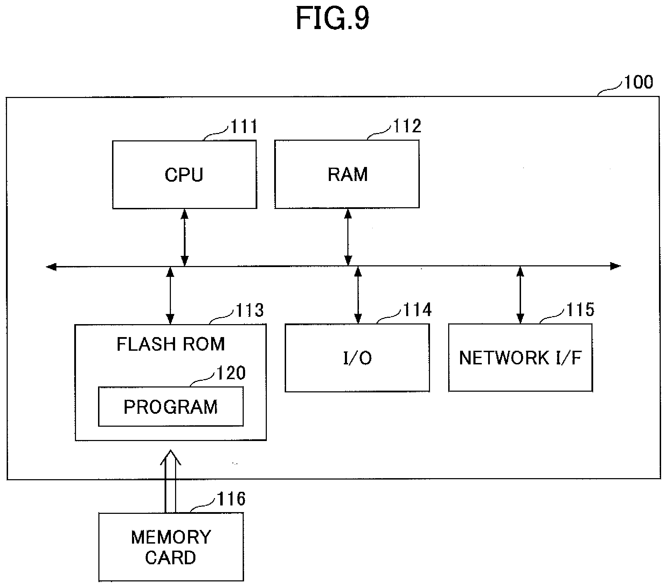

A parallax image and a brightness image obtained as above are stored in a RAM 112 (see Fig. 9) of the image processing apparatus 100, which will be described later. Since the object recognition processing is performed based on the brightness image and a distance to the object is calculated based on the parallax image, a set of the parallax image and the brightness image picked up at the same time is stored in the RAM 112 or the like.

<Hardware configuration diagram of image processing apparatus>

Fig. 9 is an example of a hardware block diagram of the image processing apparatus 100. The image processing apparatus 100 can be realized by using an information processing apparatus. The information processing apparatus includes, for example, an in-vehicle microcomputer. Moreover, in the case where the stereo camera 99 performs as much as the detection of road surface region 101 or the object recognition, separated hardware as shown in Fig. 9 is unnecessary.

The image processing apparatus 100 includes a CPU 111, the RAM 112, a flash ROM 113, an I/O unit 114 and a network I/F 115. The CPU 111 executes a program 120 stored in the flash ROM 113 to control the entire operation of the image processing apparatus 100. The program 120 stored in the flash ROM 113 is a program for detecting the road surface region 101 or performing the object recognition. The program 120 may be distributed in a state stored in a memory card 116, or may be distributed by downloading from a server (not shown) via a communication line such as a mobile telephone network or a wireless LAN.

The RAM 112 is used as a work area (a program or data are temporarily stored) when the CPU 111 executes the program. The I/O unit 114 is an input/output interface such as an I2C (Inter-Integrated Circuit) or a UART (Universal Asynchronous Receiver Transmitter). The network I/F (interface) 115 is a communication device for communicating on an on-vehicle network such as a CAN (Controller Area Network), an Ethernet (trademark registered), a FlexRay, a MOST (Media Oriented Systems Transport) or the like. The image processing apparatus 100 acquires stereo images from the stereo camera 99 via the network I/F 115. Moreover, the image processing apparatus 100 acquires object information (distance, orientation (lateral position, slope), and relative velocity) or the like from the laser radar range finding unit 28 via the network I/F 115. Moreover, the image processing apparatus 100 outputs the object information to the ECU 98 via the network I/F 115.

<Laser radar range finding unit>

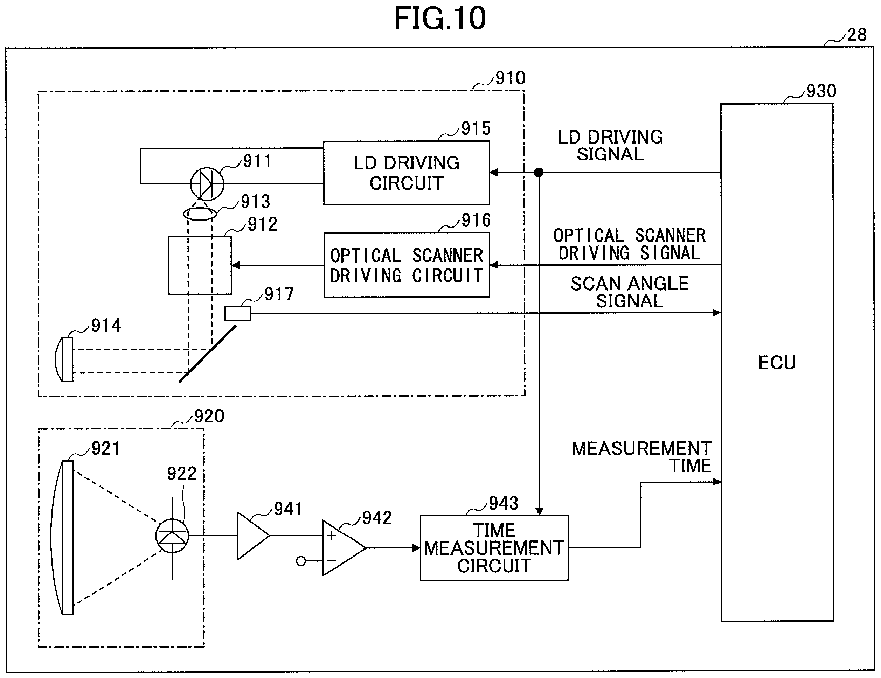

Fig. 10 is an example of a schematic configuration diagram of the laser radar range finding unit 28. The laser radar range finding unit 28 emits laser light while changing an emission direction in the vertical direction and in the horizontal direction. The laser radar range finding unit 28 detects a distance to an object, an orientation (lateral position, slope) and relative velocity by receiving laser light reflected on the object. Meanwhile, in the present embodiment, since the laser radar range finding unit 28 is used for detecting the slope of the road surface region, it is not necessary to scan laser light in the horizontal direction. Moreover, the object refers mainly to a moving body, but the object which reflects laser light may include an object other than the moving body since a solid object fixed on the ground (guard rail, road sign) or a road surface also reflects the laser light.

The laser radar range finding unit 28 includes a light transmission unit 910, a light reception unit 920, an ECU 930 which becomes a control unit, or the like. The light transmission unit 910 and the light reception unit 920 are arranged in front of a vehicle so as to detect an object existing ahead of the vehicle such as a car. They may be arranged in the rear or on the rear side of the own vehicle so as to detect a vehicle in the rear and on the rear side of the own vehicle.

The light transmission unit 910 includes a semiconductor laser diode (LD) 911 for emitting pulsed laser light, an optical scanner 912, an input optical system 913 for guiding the light emitted from the LD 911 to the optical scanner 912, an output optical system 914 for controlling a slope angle or the like between the laser light having passed through the optical scanner 912 and the road surface, or the like.

The LD 911 is connected to the ECU 930 via an LD driving circuit 915, and emits laser light periodically or successively by an LD driving signal from the ECU 930. The LD driving signal is input to a time measurement circuit 943. Meanwhile, in the present embodiment, for emitting laser light a semiconductor laser is mainly used. However, a laser of any emission principle may be used such as a solid-state laser, a gas laser or a dye laser. Moreover, laser light is a kind of electromagnetic wave having an excellent directional characteristic and convergence.

The optical scanner 912 is connected to the ECU 930 via an optical scanner driving circuit 916, and causes the laser light emitted from the LD 911 to scan repeatedly in the horizontal direction with a predetermined fixed frequency.

A scan angle for laser light in the optical scanner 912 is detected by a scan angle monitor 917, is output to a side of the ECU 930 and is fed back to the optical scanner driving signal, and thereby the scan angle (orientation, slope) and a scan frequency are controlled.

The light reception unit 920 includes a light reception lens 921, a light reception element 922 and the like. Laser light reflected on an object ahead of the vehicle enters into the light reception element 922 via the light reception lens 921, a mirror element, which is not shown, and the like.

The light reception element 922 is formed of a photodiode or the like, and outputs an electric signal with a voltage which corresponds to an optical intensity in the reflected light. The electric signal output by the light reception element 922 is amplified at an amplifier 941 and is output to a comparator 942.

At the comparator 942, a value of an output voltage from the amplifier 941 is compared with a reference voltage V0. When the value of the output voltage exceeds the reference voltage V0, a predetermined light reception signal is output to the time measurement circuit 943.

The time measurement circuit 943 outputs to the ECU 930 as measured time data a time from the output of the LD driving signal, which is output from the ECU 930 to the LD driving circuit 915, to the generation of the light reception signal, i.e. a time difference between the time when the laser light is emitted and the time when the reflected light is received. The distance to the object can be calculated based on the measured time data in the ECU 930.

In the scanning type laser radar range finding unit 28 having the above-described configuration, as the optical scanner 912 used in the light transmission unit 910, an optical scanner using a polygon mirror, a galvanometer mirror, a DMD (Digital Mirror Device) or the like may be used.

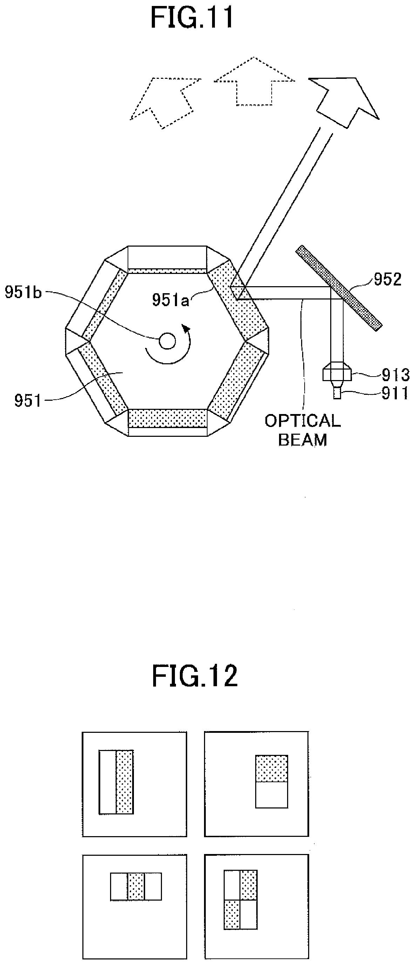

Fig. 11 is a diagram illustrating an example of an optical scanner 912 using a polygon mirror. On a mirror surface 951a of the polygon mirror 951, a laser light reflected on a mirror 952 via the input optical system 913 is incident.

The polygon mirror 951 rotates around a rotation axis 951b. Since the light incident on the mirror surface 951a is reflected, a laser light can be emitted over a wide range in the horizontal direction and made to scan. Accordingly, a distance measurement can be performed over a wide range area.

Moreover, in the present embodiment, the laser light can scan also in the vertical direction. As a means for realizing such a two dimensional scanning, there is a configuration in which scanning devices such as mirrors having scanning directions which are different from each other by 90 degrees are connected serially. In this configuration, just after laser light scans in the horizontal direction, laser light scanning in the vertical direction is performed.

Moreover, plural polygon mirrors may be laminated in the vertical direction so that plural laser lights mounted in the vertical direction scan in the horizontal direction. In order to achieve plural lines scanning more easily, a tilt angle is provided to a reflection surface with respect to a light axis of a rotation polygon mirror. In this configuration the tilt angles for the plural reflection surfaces are different from each other.

Moreover, one or more fixed laser lights may be used instead of a scanning laser light.

<Recognition of object candidate region>

The object candidate region recognition unit 24 recognizes an object candidate region 103 including a vehicle, a pedestrian or the like using the brightness image input from the brightness image input unit 22 (or the parallax image may be used). A method of recognizing the object using a Haar-like feature or a method using a HOG (Histograms of Oriented Gradients) is known. In the present embodiment, either of the methods may be used, and the above methods may be combined. The above methods will be explained in the following in turn.

The object candidate region recognition unit 24 prepares in advance a dictionary for recognition using learned data for the object. For example, in the case of the recognition using the Haar-like features, a weighting of the Haar-like features suitable for the recognition of a vehicle or a pedestrian is learned.

Fig. 12 is a diagram illustrating an example of the Haar-like feature. Before the learning, some combinations (that seem to be suitable for the recognition of a vehicle or a pedestrian) of black and white pixels, as shown in Fig. 12, are listed. Moreover, image data of various sizes in which vehicles or pedestrians are picked up (hereinafter referred to as positive teacher data) are prepared in advance. Moreover, image data of the same sizes in which neither vehicle nor pedestrian is picked up (hereinafter referred to as negative teacher data) are prepared.

The object candidate region recognition unit 24 overlays the positive teacher data on the Haar-like features, adding pixel values within the white region, adding pixel values within the black region, and calculates a difference between them. It is determined that the greater the difference is, the better coincidence with the Haar-like features is. Accordingly, it is preferable that as the difference from the positive teacher data is greater, the difference from the negative teacher data is smaller. The object candidate region recognition unit 24 learns the weighting so that a great weighting is added to Haar-like features suitable for recognizing a vehicle or a pedestrian and a smaller weighting is added to the other Haar-like features.

For example, when the weight of each of the Haar-like features is denoted as $\alpha t$ (t is an index of the Haar-like feature), $\alpha t$ is determined as follows:

i) First, equal weights are assigned to the positive teacher data and to the negative teacher data;
ii) Coincidences (difference between the sums of brightness values) between all the teacher data and the first Haar-like feature are calculated, and a correct answer rate is calculated by comparing with a threshold;
iii) A weight $\alpha 1$ is calculated using the correct answer rate;
iv) A weight of the teacher data which is a correct answer by the first Haar-like feature is reduced and a weight of the teacher data which is not a correct answer by the first Haar-like feature is increased. Accordingly, a tendency that teacher data, which is difficult to be recognized by the first Haar-like feature, can be recognized by the second or later Haar-like feature can be obtained; and
v) After that, weights $\alpha 2$, $\alpha 3$, ... , $\alpha T$ are calculated in order.

The above-described leaning method is called Boosting. For the leaning, a SVM (support vector machine) may be used.
Formula 2

$$f(x) = \Sigma^{T}_{t=1} \; \alpha_t \cdot h_t(x) \qquad \cdots\cdots\cdots\cdots \quad (2)$$

In expression (2), $\alpha t$ means a weight for the t-th Haar-like feature, $ht(x)$ means the t-th Haar-like feature and T means a number of the Haar-like features in each layer. Accordingly, expression (2) means a sum of values that calculates coincidences by all the Haar-like features in one layer for a block. In an image including a vehicle or a pedestrian, the greater the coincidence is, the higher an accuracy is. Thus, when a result of calculation for expression (2) is greater than or equal to the threshold, it is determined to be a vehicle or a pedestrian.

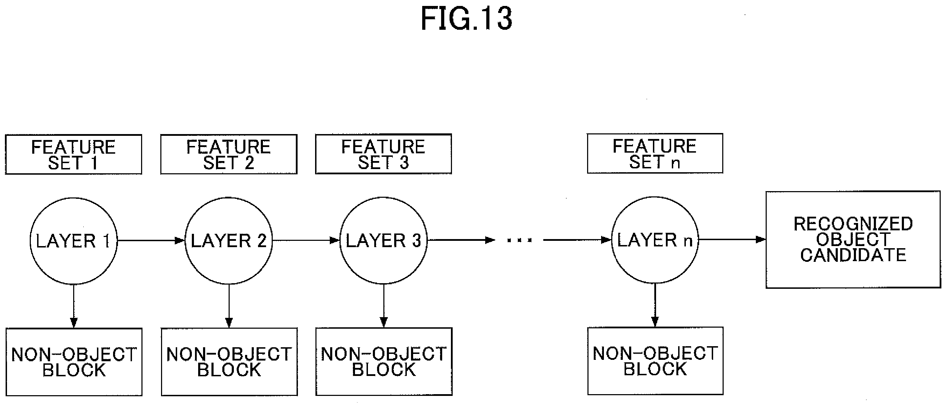

Fig. 13 is a diagram illustrating an example for schematically explaining an object identification device included in the object candidate region recognition unit 24. The object identification device is configured by connecting plural identification devices serially for each layer. A feature set of one or more Haar-like features which is obtained by the learning is set in each layer.

There are layers 1 to n, a block determined to be a vehicle or a pedestrian in the layer 1 is output to a block 2, and a block determined to be a vehicle or a pedestrian in the layer 2 is output to a block 3. Finally, it is determined that in a block determined to be a vehicle or a pedestrian in the layer n, a vehicle or a pedestrian is included, and the block becomes the object candidate region 103.

Each layer has an evaluation function shown by expression (2). When an output value of the evaluation function is smaller than a threshold set in advance, it is determined that it is not an object and an evaluation for the block is aborted.

In the present embodiment, the size of a block extracted from an image is greater in an earlier layer. The reason is that, in the present embodiment, normalization of the size of block is performed (or a size of the Haar-like feature may be normalized), and a processing time for a large block is the same as a processing time for a small block. In one image, the number of blocks detected as large blocks is small and the number of blocks detected as small blocks is large. Therefore, when selected from large blocks, by recognizing that no object is included in the block, recognition processing for the block in further layers becomes unnecessary, and time required for recognizing an object (time for processing one image) can be shortened.

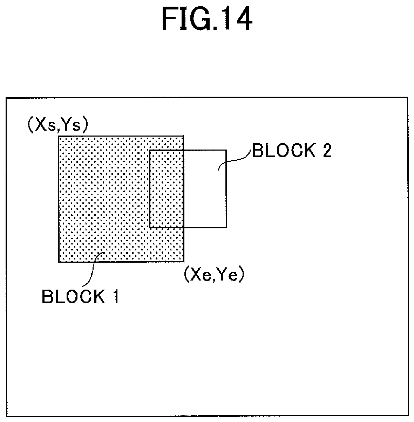

Fig. 14 is a diagram illustrating an example for schematically explaining detection of a block and recognition of an object. The object candidate region recognition unit 24, as shown in Fig. 14, cuts out a rectangular block 1 from an image. A position and a size of the block in the image are defined by upper left coordinates (Xs, Ys) and lower right coordinates (Xe, Ye). First, it is determined whether a pedestrian or a vehicle is included in the block 1 by to the evaluation function of the layer 1.

Next, recognition based on HOG feature will be explained. The HOG feature is a brightness inclination histogram for each block in an image. A block of a part of the image is divided into cells with a predetermined number of pixels, an edge in a cell is detected, and an inclination of the edge is classified into any of nine directions, for example. A histogram of brightness inclination is created and normalized for each block. The normalized brightness inclination histogram is the HOG feature.

The object candidate region recognition 24 calculates HOG features from the prepared positive teacher value and the negative teacher value, as in the case of the Haar-like features. An identification device for the HOG features is a brightness inclination histogram created from an image of a vehicle or a pedestrian. Similarity between histograms is calculated using Euclidean distances or Bhattacharyya distances. Positive teacher data are determined to be a correct answer when the similarity is greater than or equal to a threshold, and Negative teacher data are determined to be a correct answer when the similarity is less than the threshold.

Accordingly, as in the case of the Haar-like features, weights $\alpha t$ are set in the identification device and the weights can be determined by learning the teacher data by the Boosting.

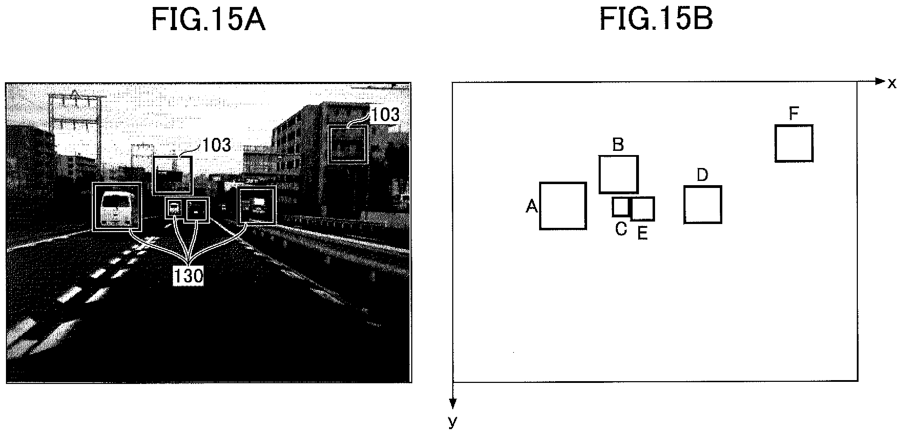

Fig. 15A is a diagram illustrating an example of a result of recognition for the object candidate region 103 in an image. Fig. 15B is a diagram illustrating an example of positions of the respective object candidate regions A to F in the image. It is found that in each of the object candidate regions A, C, E and D a vehicle is imaged. On the contrary, in any of the object candidate regions B and F a vehicle is not imaged, and is regarded as a false recognition in the present circumstances. However, as described later, by the object recognition processing unit 26 taking account of the position relative to the road surface region 101, the object candidate regions B, F will be excluded.


[Detection of road surface region]


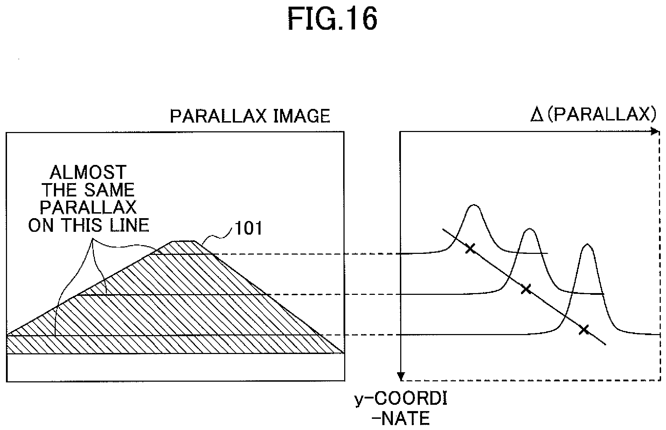

Fig. 16 is a diagram illustrating an example for schematically explaining the detection of the road surface region 101 according to the invention. Here, the road is assumed to be flat for explanation. A left part of Fig. 16 illustrates schematically the road surface region 101 in a parallax image, and a right part of Fig. 16 illustrates a parallax histogram.

The parallax histogram is a histogram of a parallax value $\Delta$ of one horizontal line in the parallax image. Since the road surface region 101 is flat, the parallax value $\Delta$ of one line in the horizontal direction is almost constant. Therefore, in the case where the road surface region 101 exists, the histogram of the parallax value $\Delta$ of one line in the horizontal direction concentrates on this constant parallax value $\Delta$, and has a peak at the parallax value $\Delta$.

In the right part of Fig. 16, the histogram of the parallax value of one line in the horizontal direction in the parallax image is plotted with respect to y-coordinate (vertical direction of the image). The parallax value $\Delta$ becomes gradually smaller, as it goes to a distance (in the direction where y-coordinate decreases). Moreover, a length of the road surface region 101 in the horizontal direction becomes gradually shorter. Therefore, as shown in the right part of Fig. 16, the peak of the histogram becomes gradually smaller and moves gradually in the upper left direction as it goes to a distance.

Next, in a scatter diagram where a parallax value, at which the histogram has a peak, is plotted with respect to y-coordinate in the parallax image, the respective peaks are placed on one straight line. This is because the parallax value $\Delta$ is proportional to y-coordinate on a flat road. Therefore, by detecting this straight line, the road surface region 101 can be detected.

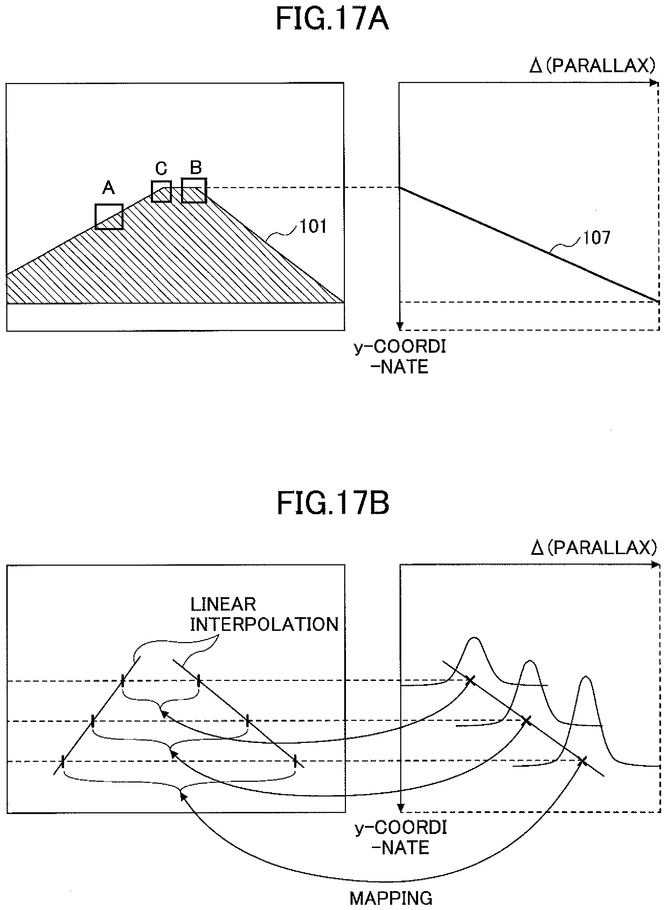

Fig. 17A is a diagram illustrating an example of a road inclination curve 107 obtained from the peaks of the histograms. When the road is flat, the road inclination curve 107 is a straight line. As a method of generating a line from a bunch of points, the Hough transformation is known. Moreover, in the case where an approximated line is found by using a least square method and a correlation coefficient exhibits a value sufficiently close to a line (for example, greater than or equal to 0.9 where the maximum is 1.0), it may be determined that a line is detected.

In the case where a line is detected and the road surface region 101 is detected, the road surface detection processing unit 25 identifies a pixel of a parallax value, at which the histogram has a peak, on the parallax image. That is, the parallax value at which the histogram has a peak is associated with a parallax value on the parallax image (mapping).

Fig. 17B is a diagram illustrating an example for explaining the mapping. At the same y-coordinate, the parallax value of peak on the line in the histogram diagram and a pixel on the parallax image having the same parallax value are identified. According to the above, a pixel region in the parallax image associated with the parallax value of peak is the road surface region 101.

Meanwhile, since the parallax for the road surface region 101 is not strictly constant, all parts of the road surface region 101 cannot always be identified. Therefore, the road surface detection processing unit 25 performs an interpolation process between points to create the road surface region 101. That is, since a horizontal line between a leftmost end and a rightmost end which are mapped at an arbitrary y-coordinate is supposed to be the road surface region, an interpolation process is performed in the horizontal direction. Moreover, at respective y-coordinates, leftmost points on the road surface region may be approximated by a line and rightmost points may be approximated by a line. According to the above, the road surface region 101 with outer edges having straight line shapes can be determined.

<In case of slanted road>

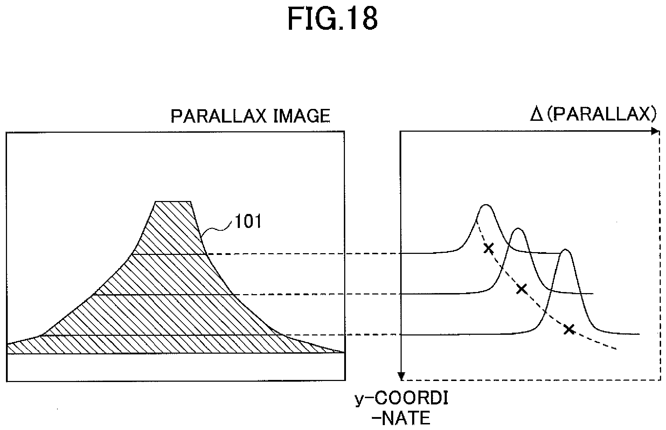

Next, with reference to Fig. 18, detection of the road surface region during travelling on a slanted road will be explained. In the case where the inclination of the road surface changes greatly as shown in a left part of Fig. 18, the peaks of the histograms are not placed on a straight line, as shown in a right part of Fig. 18. This is because when the y-coordinate becomes smaller (a distant road surface is viewed), the road surface is seen closely since the road surface is slanted, and the position of the peak is shifted in a direction where the parallax value $\Delta$ increases.

When such peak positions are approximated by plural lines, the road surface region 101 can be detected to the extent that there is not a significant disadvantage for driving support. However, it is difficult to set an appropriate number of lines. This is because when the number of lines is small, accuracy for approximating a curve is insufficient and an error is large. Moreover, when the number of approximate curves is large, a length of one line is small and accuracy in the approximation with lines is low. That is, in the case of detecting a short line by the Hough transformation, accuracy in the detection of the line is low.

Therefore, the image processing apparatus 100 according to the present embodiment determines the number of lines according to a slope detected by the laser radar range finding unit 28.

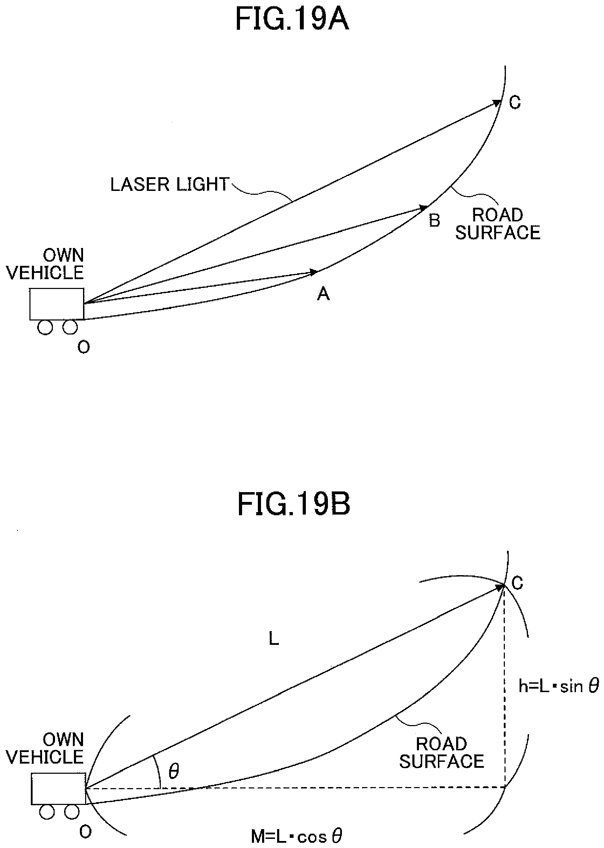

Fig. 19A is a diagram illustrating an example for explaining the detection of slope by the laser radar range finding unit 28. In Fig. 19A, laser light is scanned in the vertical direction. The laser lights emitted in the directions A, B and C according to the scanning are reflected on the road surface and received by the light reception unit 920. It is determined that the laser light recognizes the road surface, since a position the laser light reaches is not the object candidate region 103. That is, in the case where laser light is reflected from three directions A, B and C, according to whether the object candidate region 103 exists in each of the direction and at its distance, it is determined whether it is a road surface.

Then, in the case where the laser light from the road surface is received, the road surface detection processing unit 25 determines a slope based on the reflected light from the farthest (direction of the highest elevation angle). Therefore, the road region to a remote spot can be detected. The slope angle $\theta$ is an elevation angle of the reflection direction, as shown in Fig. 19B.

Meanwhile, since heights and distances of the points A, B and C on the road surface have been obtained, the slope may be determined according to a difference between heights of the point C and of the point O. The height h is calculated by $L \cdot \sin\theta$, and the distance M in the horizontal direction between the point C and the point O is calculated by $L \cdot \cos\theta$. Accordingly, the slope can be obtained only from the orientation (slope), or the distance and the orientation (slope).

The road surface detection processing unit 25 increases the number of approximate lines as the slope becomes greater, and decreases the number of approximate lines as the slope becomes smaller. When the slope is great, as shown by the road inclination curve 107 in the right part of Fig. 18, a curvature becomes greater and the approximation is improved if it is approximated using a large number of lines for the approximation with lines.

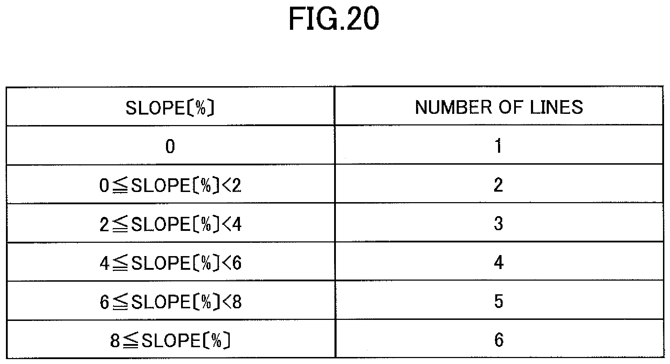

Fig. 20 is a diagram illustrating an example of a table in which the slope angle is associated with the number of approximate curves. The table is stored in the flash ROM 113 or the RAM 112 in the image processing apparatus 100. Moreover, the table may be stored in a server which can be accessed via a network.

Meanwhile, the slope angle (%) is obtained by $100 \times$ (change in height)/(travel distance). Moreover, the slope angle (%) is an absolute value, and deals with both an ascending road and a descending road. For the slope of 0%, the number of approximate curves is one. The number of approximate curves increases as the slope angle becomes greater. The road surface detection processing unit 25 calculates the slope angle (%) based on an orientation (slope) or a distance and an orientation (slope) acquired from the laser radar range finding unit 28, and determines the number of approximate curves with reference to the table.

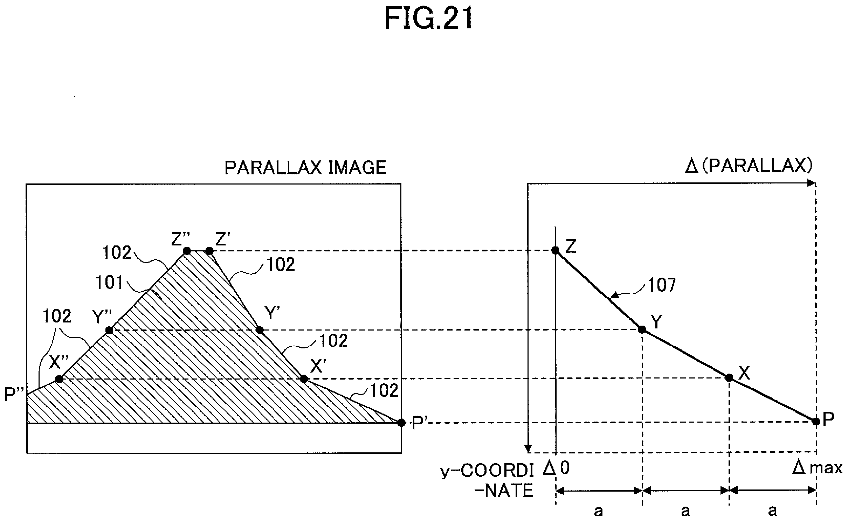

Fig. 21 is a diagram illustrating an example for explaining the detection of the road surface region 101 when the road surface is slanted. When it is detected that the road surface is slanted, in such a way as described later in detail, the road surface detection processing unit 25 acquires the orientation (slope) or the distance and the orientation (slope) from the laser radar range finding unit 28. Then, the number of approximate curves is determined from the table.

Here, it is assumed that the number is determined to be three.

The road surface detection processing unit 25 divides the length between the maximum parallax value $\Delta$max having a peak and the minimum parallax value $\Delta 0$ having a peak equally among three segments each having a length "a". Then, from points P, X, Y and Z which are identified by these parallax values ($\Delta 0$ to $\Delta$max), lines are detected. That is, the Hough transformation is performed for peaks of histograms between P and X, peaks between X and Y and peaks between Y and Z, respectively. By determining the approximate number of lines in this way, the road inclination curve 107 can be approximated with lines, the number of which is not too large and not too small.

The road surface detection processing unit 25, in the same way as in the case of the flat road surface, detects the road surface region 101 by identifying a pixel of the parallax image corresponding to the parallax value of the peak of the histogram. Moreover, since it is identified by a line from left and right outer edges of the road surface region 101, the road surface detection processing unit 25 approximates the left and right outer edges of the road surface region 101 with lines, the number of which is the same as that for the road inclination curve 107. That is, a segment of the right outer edge of the road surface region 101 between P' corresponding to P and X' corresponding to X is approximated by a line. Similarly, a segment between X' and Y' corresponding to Y and a segment between Y' and Z' corresponding to Z are approximated by lines, respectively. Meanwhile, the points P', X', Y' and Z' are points of pixels at rightmost edge having the same parallax value as the parallax value of the peaks. The left outer edge is approximated with lines in the same way as above. The points P", X", Y" and Z" are points of pixels at leftmost edge having the same parallax value as the parallax value of the peaks. Accordingly, even when the road surface is inclined, the road surface region 101 can be determined accurately. Each of the range between P' and X' in the y-direction, the range between X' and Y' in the y-direction and the range between Y' and Z' in the y-direction is an example of a "range" recited in claims.

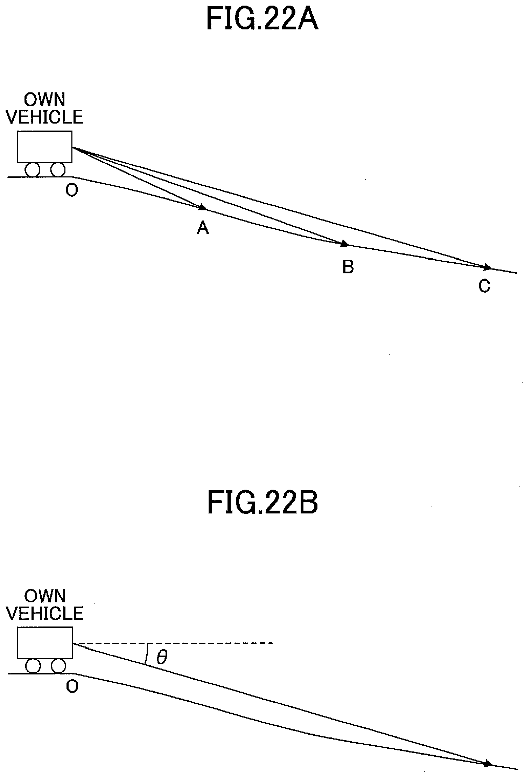

Next, the detection of the road surface region 101 in the case of the descending road will be explained. Fig. 22A is a diagram illustrating an example for explaining the detection of the slope by the laser radar range finding unit 28. By laser light scanning in the vertical direction, the laser lights emitted in the directions A, B and C are reflected on the road surface and received by the light reception unit 920. In the case where laser light from the road surface is received, the road surface detection processing unit 25 determines the slope based on the reflected light from the direction an elevation angle of which is the closest to the horizontal direction (the farthest). The slope angle $\theta$ is an elevation angle of the reflection direction, as shown in Fig. 22B. Meanwhile, in the same way as in the case for the ascending road, since heights and distances of the points A, B and C on the road surface have been obtained, the slope may be determined according to a difference between heights of the point C and of the point O.

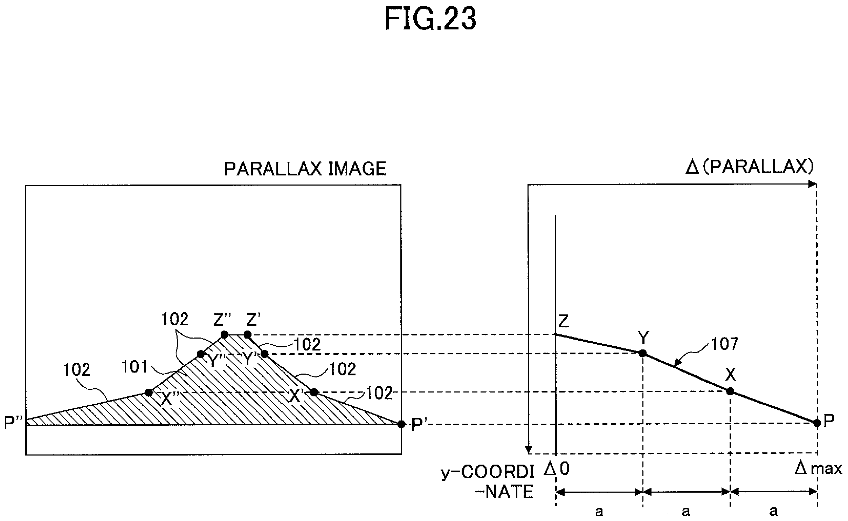

Fig. 23 is a diagram illustrating an example for explaining the detection of the road surface region 101 when the road surface is slanted. Also in the case of the descending road, the peaks of the histograms are not placed on a straight line. This is because when y-coordinate becomes smaller, the road surface is seen distantly since the road surface is slanted, and the position of the peak is shifted in a direction where the parallax value $\Delta$ decreases.

The road surface detection processing unit 25 determines the number of approximate curves from the table. Further processing is the same as in the case of the ascending road.

<Detection of slanted road surface>

The determination whether the road surface is slanted will be explained. Since the road surface detection processing unit 25 creates a road inclination curve 107 with a line when the vehicle travels on a road which is not slanted, the road surface detection processing unit 25 determines whether to increase a number of the lines according to a result of determination whether there is a slope. The method of determination includes a method using a line detected by the Hough transformation and a method using an orientation (slope) detected by the laser radar range finding unit 28.

Also from the curve connecting peaks, shown in the left part of Fig. 18, a line can be detected by the Hough transformation. Since it is detected that there is a slope before detecting the road surface region 101, the road surface detection processing unit 25 monitors a slope of the road inclination curve 107. In the case where the road is flat, since the y-coordinate of a vanishing point is constant, the slope of the road inclination curve 107 is a prescribed value. On the other hand, in the case of an ascending road, the vanishing point rises higher (y-coordinate becomes smaller). In the case of a descending road, the vanishing point moves lower (y-coordinate becomes greater). Moreover, when the vanishing point moves vertically, the slope of the road inclination curve 107 changes.

Accordingly, the road surface detection processing unit 25 determines that there is an ascending road in the case where the vanishing point (y-coordinate when the parallax value is zero) of the road inclination curve 107 is significantly higher than the vanishing point in the case of the flat road. Moreover, the road surface detection processing unit 25 determines that there is a descending road in the case where the vanishing point of the road inclination curve 107 is significantly lower than the vanishing point in the case of the flat road.

Similarly, in the case where the road inclination curve 107 is inclined upward to the left significantly compared with the case of the flat road, it is determined that an ascending road exists. Moreover, in the case where the road inclination curve 107 is inclined downward to the left significantly compared with the case of the flat road (in the case where there is a significant difference), it is determined that a descending road exists. The vanishing point and the slope of the line are example of a parameter recited in claims.

Since the detection of lines has been performed conventionally, an increase in work load can be suppressed to the minimum according to the determination from the road inclination curve 107.

In the case of using the orientation (slope) detected by the laser radar range finding unit 28, an object is detected from an orientation other than the horizontal direction. When there is not an object candidate region 103 in the direction, it is determined that the road is slanted.

In this case, since another calculation for the road inclination curve 107 is not necessary, a work load of calculation for the road inclination curve 107 does not increase. However, it is always required to determine whether there is a slope based on the orientation (slope) detected by the laser radar range finding unit 28.

[Operation procedure]

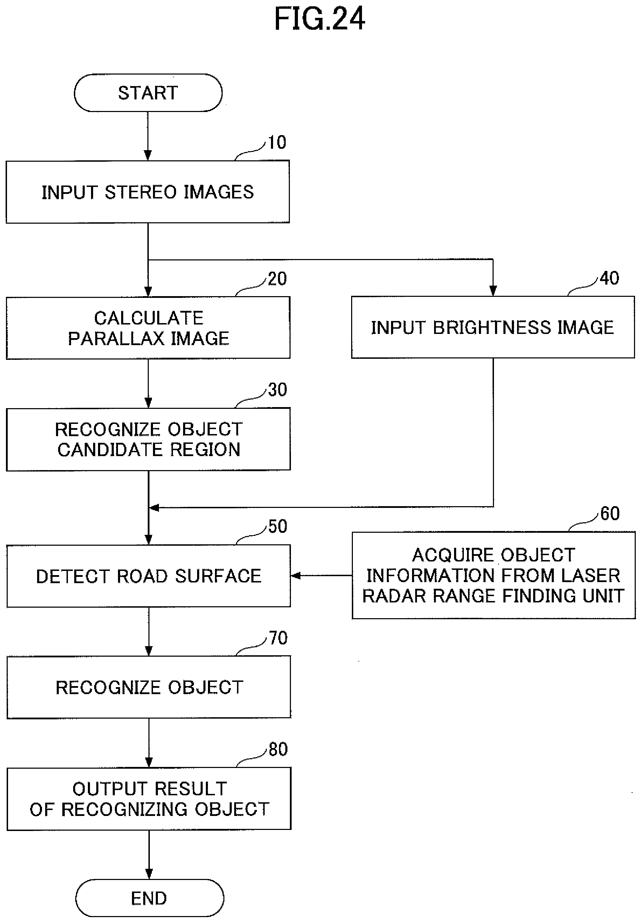

Fig. 24 is a flowchart illustrating an example of a procedure of recognizing an object in the image processing apparatus 100 according to the present embodiment.

Since the stereo camera 99 periodically picks up stereo images, the stereo image input unit 21 outputs the stereo images to the brightness image input unit 22 and the parallax image calculation unit 23 (step S10).

According to the above operation, the brightness image input unit 22 inputs either of left and right brightness images to the object candidate region recognition unit 24 (step S40).

Moreover, the parallax image calculation unit 23 calculates a parallax image (step S20).

The object candidate region recognition unit 24 recognizes an object candidate region 103 from the brightness image or a parallax image (step S30).

The road surface detection processing unit 25 detects a road surface region 101 (step S50). Here, when the road surface detection processing unit 25 detects that the road is slanted, the range finding information acquisition unit 29 acquires object information from the laser radar range finding unit 28 (step S60). According to the above operation, a road inclination curve 107 and the road surface region 101 can be approximated by plural lines, and the road surface region 101 can be detected accurately.

Next, the object recognition processing unit 26 performs object recognition processing (step S70). That is, the object candidate region 103, at least a part of which overlaps the road surface region 101 is detected as an object region.

The object recognition result processing unit outputs a result of object recognition to the ECU 98 (step S80).

As explained above, the image processing apparatus 100 according to the present embodiment, by combining distance images picked up by a stereo camera and a laser radar, can detect the road surface region 101 with high accuracy and recognize an object with high accuracy.

Further, the present invention is not limited to these embodiments, but various variations and modifications may be made without departing from the scope of the present invention as defined by the claims.

For example, the stereo camera 99 is installed so as to image an object in front of the vehicle. However, the camera may be installed so that it can image not only the front but also the rear, the rear side or the like.

Moreover, in the present embodiment, the recognition of only a vehicle or a pedestrian is explained. However, the image processing apparatus 100 can recognize a bicycle, a motorcycle or the like.

Moreover, the image processing apparatus according to the present embodiment may be installed on not only a car having four wheels but also a three-wheeled automobile, a heavy vehicle having more than four wheels or the like. Moreover, the image processing apparatus may be installed on a motorcycle.

The present application is based on and claims the benefit of priority of Japanese Priority Applications No. 2013-272524 filed on December 27, 2013, and No. 2014-256892 filed on December 19, 2014.

**Claims**

1. An image processing apparatus (100) for detecting an image region in an image picked up by a stereo camera (99), comprising:

   a distance acquisition unit configured to acquire, from a laser radar range finding unit (28), a plurality of distances between the stereo camera (99) and positions at which electromagnetic waves, emitted in directions around an optical axis of the stereo camera (99), are reflected,
   a parallax image calculation unit (23) configured to generate a parallax image including a parallax value for each pixel or each pixel block in the image picked up by the stereo camera (99); and
   an image region determination unit (24) configured to create a histogram of the parallax values for every horizontal line in the parallax image,

wherein the image region determination unit (24) is configured to determine a slope of the image region according to the distance obtained from the reflected wave of the electromagnetic wave emitted in the direction with a greatest elevation angle with respect to the optical axis of the stereo camera (99) and to determine the image region by detecting lines from a scatter diagram in which parallax values, at which the histograms have peaks, are plotted with respect to a height in the parallax image, a number of the lines being set based on the slope.

2. The image processing apparatus (100) as claimed in claim 1, wherein the image region determination unit (24) is configured to detect the greater number of lines for the greater slope.

3. The image processing apparatus (100) as claimed in claim 1 or 2, wherein the image region determination unit (24) is configured to determine the image region including the pixel in the parallax image having the parallax value, at which the histogram has a peak, and to approximate an outer edge of the image region by lines for each of parts of the image region arranged in the height direction of the parallax image.

4. The image processing apparatus (100) as claimed in any one of claims 1 to 3, further comprising:

a detection target candidate region detection unit (24) configured to detect detection target candidate regions in the image; and
a detection target region detection unit (24) configured to detect a detection target region, in which a detection target is picked up, from the detection target candidate regions based on positional relationships between the detection target candidate regions and the image region.

5. The image processing apparatus (100) as claimed in claim 4, wherein the detection target region detection unit (24) is configured to detect the detection target region in a case where at least a part of the detection target region overlaps with the image region.

6. The image processing apparatus (100) as claimed in any one of claims 1 to 5, wherein the image region includes an image of a road surface.

7. An image processing method for detecting an image region in an image picked up by a stereo camera (99), comprising:

acquiring a plurality of distances between the stereo camera (99) and positions at which electromagnetic waves, emitted in directions around an optical axis of the stereo camera (99), are reflected;
generating a parallax image including a parallax value for each pixel or each pixel block in the image picked up by the stereo camera (99);
creating a histogram of the parallax values for every horizontal line in the parallax image;
determining a slope of the image region according to the distance obtained from the reflected wave of the electromagnetic wave emitted in the direction with a greatest elevation angle with respect to the optical axis of the stereo camera (99); and
determining the image region by detecting lines from a scatter diagram in which parallax values, at which the histograms have peaks, are plotted with respect to a height in the parallax image, a number of the lines being set based on the slope.

8. A computer program comprising instructions which, when the program is executed by a computer, cause the computer to perform the method of claim 7.

9. An image processing system (200) for detecting an image region in an image picked up by a stereo camera (99) and detecting a detection target based on the image region, comprising:

a laser range finding unit (28) configured to emit the electromagnetic waves; and
an image processing apparatus (100) according to any one of claims 1 to 6.

10. The image processing system (200) as claimed in claim 9, further comprising:
a driving support unit configured to perform a driving support for a driver of a moving body based on the distance for the detection target region, wherein the image processing system (200) is installable on the moving body.

11. The image processing system (200) as claimed in any one of claims 9 or 10, wherein the laser radar range finding unit (28) is configured to determine the slope of the image region, in a case where a parameter of the detected line is greater than a threshold, and the image region determination unit (24) is configured to determine the image region based on the slope.

**Patentansprüche**

1. Ein Bildverarbeitungsgerät (100) zum Detektieren einer Bildregion in einem von einer Stereokamera (99) aufgenommenen Bild, aufweisend:

   eine Abstandsakquirierungseinheit, die dazu eingerichtet ist, von einer Lasar-Radar-Abstandsermittlungseinheit (28) eine Vielzahl von Abständen zwischen der Stereokamera (99) und Positionen, an denen elektromagnetische Wellen, emittiert in Richtungen um eine optische Achse der Stereokamera (99), reflektiert werden, zu akquirieren;
   eine Parallaxenbild-Berechnungseinheit (23), die dazu eingerichtet ist, ein Parallaxenbild zu erzeugen, das einen Parallaxenwert für jeden Pixel oder jeden Pixelblock in dem von der Stereokamera (99) aufgenommenen Bild enthält; und
   eine Bildregion-Ermittlungseinheit (24), die dazu eingerichtet ist, ein Histogramm der Parallaxenwerte für jede horizontale Linie in dem Parallaxenbild zu erzeugen,
   wobei die Bildregion-Ermittlungseinheit (24) dazu eingerichtet ist, eine Neigung der Bildregion zu bestimmen gemäß dem Abstand erhalten von der reflektierten Welle der elektromagnetischen Welle, die in die Richtung mit einem größten Erhebungswinkel mit Bezug auf auf die optische Achse der Stereokamera (99) emittiert ist, und die Bildregion zu bestimmen durch das Detektieren von Linien aus einer Punktwolke, in der Parallaxenwerte, bei denen die Histogramme Spitzen haben, gezeichnet sind mit Bezug auf eine Höhe in dem Parallaxenbild, wobei eine Anzahl der Linien basierend auf der Neigung festgelegt wird.

2. Das Bilderarbeitsgerät (100) wie im Anspruch 1 beansprucht, wobei die Bildregion-Ermittlungseinheit (24) dazu eingerichtet ist, eine größere Anzahl von Linien für eine größere Neigung zu detektieren.

3. Das Bilderarbeitsgerät (100) wie im Anspruch 1 oder 2 beansprucht, wobei die Bildregion-Ermittlungseinheit (24) dazu eingerichtet ist, eine Bildregion zu ermitteln, die den Pixel in dem Parallaxenbild enthält, der den Parallaxenwert hat, bei dem das Histogramm eine Spitze hat, und einen äußeren Rand der Bildregion zu approximieren durch Linien für jeden von Teilen der Bildregion angeordnet in der Höhenrichtung des Parallaxenbildes.

4. Das Bilderarbeitsgerät (100) wie in einem der Ansprüche 1 oder 3 beansprucht, weiter aufweisend:

   eine Detektionsziel-Kandidatenregion-Detektionseinheit (24), die dazu eingerichtet ist, Detektionsziel-Kandidatenregionen in dem Bild zu detektieren; und
   eine Detektionszielregion-Detektionseinheit (24), die dazu eingerichtet ist, aus den Detektionsziel-Kandidatenregionen eine Detektionszielregion zu detektieren, in der ein Detektionsziel abgebildet ist, basierend auf Positionsbeziehungen zwischen den Detektionsziel-Kandidatenregionen und der Bildregion.

5. Das Bildverarbeitungsgerät (100) wie im Anspruch 4 beansprucht, wobei die Detektionszielregion-Detektionseinheit (24) dazu eingerichtet ist, die Detektionszielregion zu detektieren in einem Fall, in dem zumindest ein Teil der Detektionszielregion mit der Bildregion überlappt.

6. Das Bilderarbeitsgerät (100) wie in einem der Ansprüche 1 oder 5 beansprucht, wobei die Bildregion ein Bild einer Straßenoberfläche enthält.

7. Ein Bildverarbeitungsverfahren zum Detektieren einer Bildregion in einem von einer Stereokamera (99) aufgenommenen Bild, aufweisend:

   das Akquirieren einer Vielzahl von Abständen zwischen der Stereokamera (99) und Positionen, an denen elektromagnetische Wellen, emittiert in Richtungen um eine optische Achse der Stereokamera (99), reflektiert werden;
   das Erzeugen eines Parallaxenbildes, das einen Parallaxenwert für jeden Pixel oder jeden Pixelblock in dem von der Stereokamera (99) aufgenommenen Bild enthält; und
   das Erzeugen eines Histogramms der Parallaxenwerte für jede horizontale Linie in dem Parallaxenbild,
   das Bestimmen einer Neigung der Bildregion gemäß dem Abstand erhalten von der reflektierten Welle der elektromagnetischen Welle, die in die Richtung mit einem größten Erhebungswinkel mit Bezug auf auf die

**EP 2 889 641 B1**

optische Achse der Stereokamera (99) emittiert ist; und

das Bestimmen der Bildregion durch das Detektieren von Linien aus einer Punktwolke, in der Parallaxenwerte, bei denen die Histogramme Spitzen haben, gezeichnet sind mit Bezug auf eine Höhe in dem Parallaxenbild, wobei eine Anzahl der Linien basierend auf der Neigung festgelegt wird.

8. Ein Computerprogramm enthaltend Instruktionen die, wenn das Programm von einem Computer ausgeführt wird, den Computer dazu veranlassen, das Verfahren nach Anspruch 7 auszuführen.

9. Ein Bildverarbeitungssystem (200) zum Detektieren einer Bildregion in einem von einer Stereokamera (99) aufgenommenen Bild und zum Detektieren eines Detektionsziels basierend auf der Bildregion, enthaltend:

eine Lasar-Radar-Abstandsermittlungseinheit (28), die dazu eingerichtet ist, die elektromagnetischen Wellen zu emittieren; und

ein Bildverabeitungsgerät (100) nach einem der Ansprüche 1 bis 6.

10. Das Bildverarbeitungssystem (200) wie im Anspruch 9 beansprucht, weiter aufweisend:

eine Fahrunterstützungseinheit, die dazu eingerichtet ist, eine Fahrunterstützung für einen Fahrer eines beweglichen Körpers durchzuführen basierend auf dem Abstand für die Detektionszielregion, wobei das Bildverarbeitungssystem (200) in dem beweglichen Körper installierbar ist.

11. Das Bildverarbeitungssystem (200) wie in einem der Ansprüche 9 oder beansprucht, wobei die Lasar-Radar-Abstandsermittlungseinheit (28) dazu eingerichtet ist, die Neigung der Bildregion zu ermitteln, in einem Fall, in dem ein Parameter der detektierten Linie größer ist als ein Grenzwert, und die Bildregion-Ermittlungseinheit (24) dazu eingerichtet ist, die Bildregion basierend auf der Neigung zu ermitteln.

**Revendications**

1. Appareil de traitement d'image (100) pour détecter une région d'image dans une image capturée par une caméra stéréo (99), comprenant :

une unité d'acquisition de distance configurée pour acquérir, à partir d'une unité de télémétrie à radar laser (28), une pluralité de distances entre la caméra stéréo (99) et des positions auxquelles des ondes électromagnétiques, émises dans des directions autour d'un axe optique de la caméra stéréo (99), sont réfléchies, une unité de calcul d'image parallaxe (23) configurée pour générer une image parallaxe incluant une valeur parallaxe pour chaque pixel ou chaque bloc de pixels dans l'image capturée par la caméra stéréo (99) ; et une unité de détermination de région d'image (24) configurée pour créer un histogramme des valeurs parallaxe pour chaque ligne horizontale dans l'image parallaxe, dans lequel l'unité de détermination de région d'image (24) est configurée pour déterminer une pente de la région d'image selon la distance obtenue à partir de l'onde réfléchie de l'onde électromagnétique émise dans la direction avec un angle d'élévation le plus grand par rapport à l'axe optique de la caméra stéréo (99) et pour déterminer la région d'image en détectant des lignes à partir d'un diagramme de dispersion dans lequel des valeurs parallaxe, auxquelles les histogrammes ont des crêtes, sont placées par rapport à une hauteur dans l'image parallaxe, un nombre des lignes étant réglé sur la base de la pente.

2. Appareil de traitement d'image (100) selon la revendication 1, dans lequel l'unité de détermination de région d'image (24) est configurée pour détecter le nombre plus grand de lignes pour la pente plus grande.

3. Appareil de traitement d'image (100) selon la revendication 1 ou 2, dans lequel l'unité de détermination de région d'image (24) est configurée pour déterminer la région d'image incluant le pixel dans l'image parallaxe ayant la valeur parallaxe, à laquelle l'histogramme a une crête, et pour approximer un bord extérieur de la région d'image par des lignes pour chacune de parties de la région d'image agencée dans la direction de hauteur de l'image parallaxe.

4. Appareil de traitement d'image (100) selon l'une quelconque des revendications 1 à 3, comprenant en outre :

une unité de détection de région candidate cible de détection (24) configurée pour détecter des régions candidates cibles de détection dans l'image ; et une unité de détection de région cible de détection (24) configurée pour détecter une région cible de détection, dans laquelle une cible de détection est capturée, à partir des régions candidates cibles de détection sur la base de relations positionnelles entre les régions candidates cibles de détection et la région d'image.

5. Appareil de traitement d'image (100) selon la revendication 4, dans lequel l'unité de détection de région cible de détection (24) est configurée pour détecter la région cible de détection au cas où au moins une partie de la région cible de détection chevauche la région d'image.

6. Appareil de traitement d'image (100) selon l'une quelconque des revendications 1 à 5, dans lequel la région d'image inclut une image d'une surface de route.

7. Procédé de traitement d'image pour détecter une région d'image dans une image capturée par une caméra stéréo (99), comprenant.
l'acquisition d'une pluralité de distances entre la caméra stéréo (99) et de positions auxquelles des ondes électromagnétiques, émises dans des directions autour d'un axe optique de la caméra stéréo (99), sont réfléchies ;
la génération d'une image parallaxe incluant une valeur parallaxe pour chaque pixel ou chaque bloc de pixels dans l'image capturée par la caméra stéréo (99) ;
la création d'un histogramme des valeurs parallaxe pour chaque ligne horizontale dans l'image parallaxe ;
la détermination d'une pente de la région d'image selon la distance obtenue à partir de l'onde réfléchie de l'onde électromagnétique émise dans la direction avec un angle d'élévation le plus grand par rapport à l'axe optique de la caméra stéréo (99) ; et
la détermination de la région d'image en détectant des lignes à partir d'un diagramme de dispersion dans lequel des valeurs parallaxe, auxquelles les histogrammes ont des crêtes, sont placées par rapport à une hauteur dans l'image parallaxe, un nombre des lignes étant réglé sur la base de la pente.

8. Programme d'ordinateur comprenant des instructions qui, lorsque le programme est exécuté par un ordinateur, font en sorte que l'ordinateur réalise le procédé selon la revendication 7.

9. Système de traitement d'image (200) pour détecter une région d'image dans une image capturée par une caméra stéréo (99) et détecter une cible de détection sur la base de la région d'image, comprenant :

   une unité de télémétrie laser (28) configurée pour émettre les ondes électromagnétiques ; et
   un appareil de traitement d'image (100) selon l'une quelconque des revendications 1 à 6.

10. Système de traitement d'image (200) selon la revendication 9, comprenant en outre
une unité de support de conduite configurée pour réaliser un support de conduite pour un conducteur d'un corps mobile sur la base de la distance pour la région cible de détection, dans lequel le système de traitement d'image (200) est installable sur le corps mobile.

11. Système de traitement d'image (200) selon l'une quelconque des revendications 9 ou 10, dans lequel l'unité de télémétrie à radar laser (28) est configurée pour déterminer la pente de la région d'image, au cas où un paramètre de la ligne détectée est supérieur à un seuil, et l'unité de détermination de région d'image (24) est configurée pour déterminer la région d'image sur la base de la pente.

FIG.1A

FIG.1B

IN CASE OF FLAT ROAD, VANISHING POINT RESIDES ON THIS HEIGHT

101

FIG.1C

103

A

C  B

101

## FIG.2A RELATED ART

## FIG.2B RELATED ART

## FIG.2C RELATED ART

FIG.3A

FIG.3B

FIG.3C

## FIG.4A

## FIG.4B

PARALLAX IMAGE

PARALLAX VALUE

102 102

105

104

y-COORDI
-NATE

PARALLAX
REGION

## FIG.4C

101

D

B

A

C

# FIG.5

200

IMAGE PROCESSING APPARATUS — 100

99 STEREO CAMERA

21 STEREO IMAGE INPUT UNIT

22 BRIGHTNESS IMAGE INPUT UNIT

23 PARALLAX IMAGE CALCULATION UNIT

24 OBJECT CANDIDATE REGION RECOGNITION UNIT

25 ROAD SURFACE DETECTION PROCESSING UNIT

26 OBJECT RECOGNITION PROCESSING UNIT

27 OBJECT RECOGNITION RESULT OUTPUT UNIT

29 RANGE INFORMATION ACQUISITION UNIT

28 LASER RADAR RANGE FINDING UNIT

98 ECU

DISTANCE ORIENTATION RELATIVE VELOCITY

# FIG.6

STEREO CAMERA — 99

CMOS (3) → CDS CIRCUIT (6) → A/D CONVERTER (7) → IMAGE PROCESSING CIRCUIT (9)

CMOS (4) → CDS CIRCUIT (5) → A/D CONVERTER (8) → IMAGE PROCESSING CIRCUIT (10)

TIMING SIGNAL GENERATION UNIT (18) ← CPU (11)

SDRAM (12)

IMAGE COMPRESSION /EXPANSION CIRCUIT (13)

MEMORY CARD (14)

OPERATION UNIT (15)

ROM (16)

RAM (17)

19

EP 2 889 641 B1

FIG.7

# FIG.8

# FIG.9

# FIG.10

EP 2 889 641 B1

# FIG.11

951b

951a

952

951

913
911

OPTICAL
BEAM

# FIG.12

# FIG.13

# FIG.14

# FIG.15A

# FIG.15B

EP 2 889 641 B1

# FIG.16

PARALLAX IMAGE

ALMOST
THE SAME
PARALLAX
ON THIS LINE

101

Δ(PARALLAX)

y-COORDI
-NATE

# FIG.17A

# FIG.17B

# FIG.18

PARALLAX IMAGE

Δ(PARALLAX)

101

y-COORDI
-NATE

# FIG.19A

# FIG.19B

# FIG.20

| SLOPE[%] | NUMBER OF LINES |
|----------|-----------------|
| 0 | 1 |
| 0≦SLOPE[%]<2 | 2 |
| 2≦SLOPE[%]<4 | 3 |
| 4≦SLOPE[%]<6 | 4 |
| 6≦SLOPE[%]<8 | 5 |
| 8≦SLOPE[%] | 6 |

FIG.21

# FIG.22A

# FIG.22B

# FIG.23

PARALLAX IMAGE

Δ(PARALLAX)

EP 2 889 641 B1

# FIG.24

```
        ┌─────────┐
        │  START  │
        └────┬────┘
             │
             ▼                                    10
   ┌──────────────────────┐
   │  INPUT STEREO IMAGES │
   └──────────┬───────────┘
              │
              │                    20                                          40
              ▼                                        ┌──────────────────────────┐
   ┌──────────────────────┐                            │  INPUT BRIGHTNESS IMAGE  │
   │      CALCULATE        │                            └────────────┬─────────────┘
   │   PARALLAX IMAGE      │                                         │
   └──────────┬───────────┘                                         │
              │                    30                               │
              ▼                                                     │
   ┌──────────────────────┐                                        │
   │   RECOGNIZE OBJECT    │                                        │
   │   CANDIDATE REGION    │                                        │
   └──────────┬───────────┘                                        │
              │◄───────────────────────────────────────────────────┘
              │                    50                                        60
              ▼                                        ┌──────────────────────────────┐
   ┌──────────────────────┐                            │      ACQUIRE OBJECT          │
   │  DETECT ROAD SURFACE  │◄───────────────────────────│ INFORMATION FROM LASER       │
   └──────────┬───────────┘                            │ RADAR RANGE FINDING UNIT     │
              │                    70                   └──────────────────────────────┘
              ▼
   ┌──────────────────────┐
   │   RECOGNIZE OBJECT    │
   └──────────┬───────────┘
              │                    80
              ▼
   ┌──────────────────────┐
   │    OUTPUT RESULT      │
   │ OF RECOGNIZING OBJECT │
   └──────────┬───────────┘
              │
              ▼
        ┌─────────┐
        │   END   │
        └─────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000329852 A
- JP 2004028727 A
- JP 2012225806 A
- GB 2289816 A
- US 2013120575 A1
- WO 2013179993 A1
- EP 2669845 A2
- US 2008024607 A1
- JP 2013272524 A
- JP 2014256892 A